# EUROPÄISCHE PATENTSCHRIFT

(11) **EP 4 454 604 B1**
(45) Veröffentlichungstag und Bekanntmachung des Hinweises auf die Patenterteilung: **26.08.2026**
(21) Anmeldenummer: 23170573.2
(22) Anmeldetag: 28.04.2023
(51) Int. Cl.: A61C 17/22, H02J 50/10

(54) **EINSCHUBEINHEIT FÜR ELEKTRISCHES KÖRPERPFLEGEGERÄT**
DRAWER ASSEMBLY FOR AN ELECTRICAL PERSONAL CARE APPLIANCE
UNITÉ D'INSERTION POUR APPAREIL ÉLECTRIQUE DE SOINS PERSONNELS

(43) Veröffentlichungstag der Anmeldung: 30.10.2024
(73) Patentinhaber: Trisa Holding AG, 6234 Triengen (CH)
(72) Erfinder: Keller, Fabian, 6212 Kaltbach (CH); Scherzinger, Stefan, 6130 Willisau (CH)
(74) Vertreter: Latscha Schöllhorn Partner AG

(56) Entgegenhaltungen:
- WO-A1-2022/128207
- US-A1- 2017 007 384

## Beschreibung

### Technisches Gebiet

Die Erfindung betrifft eine Einschubeinheit für ein Handteil eines elektrischen Körperpflegegeräts, insbesondere einer elektrischen Zahnbürste, sowie ein entsprechendes Handteil und ein entsprechendes Körperpflegegerät, insbesondere eine elektrische Zahnbürste.

Der Produktaufbau von elektrischen Körperpflegegeräten, insbesondere von elektrischen Zahnbürsten, umfasst heutzutage insbesondere ein Gehäuse, eine Einschubeinheit (welche aus mehreren Komponenten besteht, wobei eine oder mehrere dieser Komponenten das Gehäuse mindestens teilweise durchdringen können), einen Verschlussdeckel sowie eine Aufsteckbürste.

Die Montage umfasst dabei im Allgemeinen die Herstellung des Gehäuses, das Bestücken und Bereitstellen der Einschubeinheit sowie die Herstellung des Verschlussdeckels, wobei die Einschubeinheit in das Gehäuse eingeschoben wird und der Verschlussdeckel am Gehäuse angebracht wird, wodurch der Innenraum des Gehäuses verschlossen wird.

Bei Systemen mit Direktladung (Ladung mittels einer physischen elektrischen Verbindung) ist die Ladebuchse regelmässig im Gerät angeordnet und das Gehäuse wird mit einem Verschlussdeckel verschlossen, damit kein Wasser in das Gehäuse eindringen kann.

### Stand der Technik

Aus der WO 2016/117580 A1 ist eine elektrische Zahnbürste bekannt, bei welcher die Batterie bei geöffnetem Verschlussdeckel von hinten in ein Batteriekompartiment des Trägerelements eingeführt wird oder sich eine wiederaufladbare Batterie im Batteriekompartiment des Trägerelements befindet und anschliessend der Verschlussdeckel an das Handteil angebracht wird, wobei durch Drehen des Verschlussdeckels dieser einerseits verrastet und andererseits der Stromkreis geschlossen wird. Im montierten Zustand ist die Batterie indirekt mit der Printplatte verbunden und zwar über ein erstes Kontaktblech am ersten Pol und über ein zweites Kontaktblech am Verschlussdeckel. Der Stromkreis wird über den Verschlussdeckel geschlossen.

Der Verschlussdeckel wird also neben dem Verschliessen des Gehäuseinneren auch zum physischen Schliessen des Stromkreises verwendet, die Einschubeinheit ist somit alleine nicht funktionsfähig.

Aus der WO 2019/072994 A1 ist eine elektrische Zahnbürste bekannt, bei welcher während der Montage der Verschlussdeckel an dem Gehäuse fixiert wird, so dass dieser die Einschubeinheit fixiert und den Gehäuseinnenraum verschliesst. Der Verschlussdeckel kann sowohl mit dem Gehäuse verschraubt als auch beispielsweise mittels eines Bajonettverschlusses verriegelt werden.

Gemäss der WO 2022/128 207 A1 werden die Einschubeinheit bzw. die einzelnen Komponenten derselben an einer Rahmeneinheit (Monoframe) montiert, welche aus zwei halbschalenartigen Hälften besteht. Zunächst werden dabei die einzelnen Komponenten in die erste halbschalenartige Hälfte eingelegt und mit der zweiten halbschalenartigen Hälfte fixiert. Dann wird die Rahmeneinheit in das Gehäuse geschoben. Anschliessend wird der Gehäusedeckel auf das Gehäuse geschraubt und dort verriegelt bzw. fixiert.

Bei diesen Lösungen ist jeweils ein Verschlussdeckel gegenüber dem Gehäuse erforderlich, da die elektrischen Zahnbürsten auf einer Ladestation vorzugsweise induktiv (bzw. nicht direkt mit einer physischen elektrischen Verbindung) geladen werden.

Weiters wird noch auf die US 2017/007384 A1 verwiesen, welche ebenfalls eine Einschubeinheit für ein Handteil einer elektrischen Zahnbürste offenbart.

Der vorliegenden Erfindung liegt somit die Aufgabe zu Grunde, eine elektrische Zahnbürste bereitzustellen bei der die Zahl der Bauteile reduziert werden kann. Eine weitere Aufgabe der Erfindung ist es eine elektrische Zahnbürste mit einem einfachen Ladehandling bereitzustellen.

### Darstellung der Erfindung

Die Aufgabe wird erfindungsgemäss gelöst durch eine Einschubeinheit für ein Handteil eines elektrischen Körperpflegegeräts wie sie im Anspruch 1 definiert ist, sowie durch ein Handteil für ein elektrisches Körperpflegegerät, wie es im Anspruch 19 definiert ist, und ein elektrisches Körperpflegegerät, insbesondere elektrische Zahnbürste, wie es im Anspruch 20 definiert ist. Vorteilhafte Ausführungsvarianten der Erfindung ergeben aus den abhängigen Ansprüchen.

Das Wesen der Erfindung besteht im Folgenden aus: einer Einschubeinheit für ein Handteil eines elektrischen Körperpflegegeräts, insbesondere einer elektrischen Zahnbürste, welche einen Einschubträger aufweist an dem eine Antriebseinheit, ein Ein-/Aus-Schalter, eine Energiequelle, eine Printplatte sowie eine Ladevorrichtung angeordnet sind. Die Einschubeinheit ist dabei derart konfiguriert, dass mit ihr alleine ein geschlossener Stromkreis herstellbar ist und sie somit alleine funktionsfähig ist. Der Einschubträger umfasst dabei im Bereich der Ladevorrichtung einen Ladevorrichtungsträger und der Ladevorrichtungsträger und/oder die Ladevorrichtung bilden im montierten Zustand einen Teil der äusseren Oberfläche des Handteils.

Hier findet somit das Laden direkt am Gerät statt, ohne dass ein Verschlussdeckel oder eine Abdeckung entfernt werden müssen. Dadurch kann gleichzeitig die Anzahl der erforderlichen Bauteile reduziert werden, wobei allenfalls ein Verschlussdeckel -Kunststoffteil, ein Verschlussdeckel -Kontaktblech sowie ein Kontakt am Einschub sowie ein Dichtring eingespart werden können, da der Stromkreis nicht mehr mit dem Verschlussdeckel geschlossen werden muss.

Der Begriff "Einschubträger" umfasst vorliegend solche Strukturen, insbesondere rahmenartige Haltestrukturen, auf denen die einzelnen Bauteile der Einschubeinheit mit ausreichend festem Halt angeordnet werden können, um ein störungsfreies Einbringen in das Gehäuse und späteren eine sichere Anwendung des Geräts zu gewährleisten.

Der Begriff "Antriebseinheit" umfasst vorliegend alle geeigneten Motoren, insbesondere Elektromotoren, wie beispielsweise Gleichstrom- oder Wechselstrommotoren. Als Antriebsformen des Geräts sind insbesondere vibrierende Antriebe (z.B. Motor mit Exzenter für eine vibrierende Bewegung mit Standardkopf an der Aufsteckbürste), schwenkend-oszillierende Antriebe (z.B. links-rechts Schwenkbewegung mit Standardkopf an der Aufsteckbürste) sowie oszillierendrotierende Antriebe (z.B. links-rechts Drehbewegung mit Rundkopf an der Aufsteckbürste) vorgesehen.

Beim vibrierenden Antrieb umfasst die Bewegung eine Vibration, die durch einen Motor mit einem verbundenen Exzenter generiert wird. Dabei umfasst die Motorendrehzahl zwischen 8'000 U/min bis 15'000 U/min.

Beim schwenkend-oszillierenden Antrieb umfasst die Bewegung der Antriebswelle (aus ihrer Grundstellung) einen Winkelbereich von +/- 1° bis +/- 15° vorzugsweise von +/- 3° bis +/- 10°. Die Motorendrehzahl im unbelasteten Zustand beträgt von 7'000 U/min bis 12'000 U/min vorzugsweise von 9'000 U/min bis 11'000 U/min. Wobei sich daraus 15'000 bis 25'000 Bewegungen pro Minute ergeben.

Beim oszillierend-rotierenden Antrieb umfasst die Bewegung der Antriebswelle (aus ihrer Grundstellung) einen Winkelbereich von +/- 10° bis +/- 40° vorzugsweise von +/- 20° bis +/- 30° und am meisten bevorzugt von +/- 25°. Die Bewegung des Bürstenkopfs aus der Grundstellung d.h. der Drehwinkel des Borstenträgers beträgt im unbelasteten Zustand +/- 15° bis +/- 40° vorzugsweise +/- 20° bis +/- 30°. Die Motorendrehzahl im unbelasteten Zustand beträgt 3'500 U/min bis 10'000 U/min vorzugsweise 4'000 U/min bis 7'000 U/min. Wobei sich daraus 7'000 bis 10'000 Bewegungen pro Minute ergeben.

Als Bewegung werden jeweils Links- und Rechtsdrehungen aus der Mittelstellung des Bürstenkopfs gerechnet. Das Borstenfeld ist je nach Antrieb anders zur Antriebswelle/Drehachse ausgerichtet. Beim oszillierend-rotierenden Antrieb ist das Borstenfeld quasi senkrecht zur Antriebswelle und die Borsten sind parallel zur Drehachse des Borstenträgers ausgerichtet. Beim schwenkend-oszillierenden Antrieb ist das Borstenfeld senkrecht zur Antriebswelle, welche der Drehachse entspricht, ausgerichtet.

Unter dem Begriff "Printplatte" werden vorliegend insbesondere Strukturen wie Leiterplatten, Leiterkarten, Platinen und gedruckte Schaltungen verstanden. Die Printplatte ist insbesondere verbunden mit der Ladevorrichtung, der Energiequelle, der Antriebseinheit und dem Ein-/Aus-Schalter. Alle elektrischen Verbindungen im Gerät sind mit der Printplatte verbunden. Die Verbindungen können mittels elektrischer Leitungen/Kabeln oder Steck- bzw. Kontaktverbindungen realisiert werden, beispielsweise im Falle des Ein-/Aus-Schalters über eine mechanische oder eine elektrische Kopplung.

Der Begriff "Ein-/Aus-Schalter" umfasst vorliegend sowohl (insbesondere einpolige) mechanische als auch elektronische Druckschalter.

Der Begriff "Energiequelle" umfasst vorliegend insbesondere alle geeigneten Akkumulatoren (Akkus) oder Batterien (Einweg- oder Mehrwegbatterien).

Unter der Formulierung "mit ihr alleine geschlossener Stromkreis herstellbar" wird vorliegend verstanden, dass ein geschlossener Stromkreis über physische elektrische Leitungen/Kabel und/oder geeignete Steckkontaktelemente zwischen den am Einschubträger angeordneten Bauteilen hergestellt werden kann, ohne dass die Einschubeinheit in das entsprechende Gerät eingeführt werden muss.

Der "Teil der äusseren Oberfläche des Handteils" bezieht sich vorliegend insbesondere auf den hinteren Teil der Oberfläche des Handteils, welcher die Ladevorrichtung umfasst. Die äussere Oberfläche kann hier insbesondere im Wesentlichen horizontale (d.h. im Wesentlichen parallel zur Längsachse des Handteils) oder im Wesentlichen vertikale (d.h. im Wesentlichen senkrecht zur Längsachse des Handteils) Bereiche umfassen aber auch nach aussen gewölbte Bereiche. Der Ladevorrichtungsträger und/oder die Ladevorrichtung liegen dabei jedenfalls teilweise nach aussen hin offen.

Unter dem Begriff "Ladevorrichtung" wird vorliegend insbesondere eine Vorrichtung zur direkten Ladung des entsprechenden Geräts verstanden, d.h. grundsätzlich ohne dass eine z.B. induktive Ladestation benötigt wird. Die Ladevorrichtung umfasst somit insbesondere Ladebuchsen, über welche mittels eines Netzteils geladen wird, welches einen mit der Ladebuchse korrespondierenden Stecker aufweist. Die Ausgestaltung der Ladevorrichtung als induktive Vorrichtung ist grundsätzlich aber auch denkbar.

Der Begriff "Ladevorrichtungsträger" umfasst vorliegend solche Strukturen, welche eine sichere Halterung der Ladevorrichtung an der Einschubeinheit gewährleisten und die Ladevorrichtung jedenfalls teilweise umschliessen und/oder teilweise zumindest stützen. Der Ladevorrichtungsträger ist dabei regelmässig auch strukturell konfiguriert, eine Abdichtung der Einschubeinheit gegenüber dem Gehäuse bereitzustellen. Die Ladevorrichtung liegt nach aussen hin offen.

Vorzugsweise umfasst die Ladevorrichtung eine Einsteckvorrichtung, insbesondere eine Ladebuchse für einen korrespondierenden Stecker eines Netzteils. Diese Form der Direktladung hat sich in der Praxis als besonders effizient erwiesen.

Vorzugsweise umfasst die Ladevorrichtung eine induktive Vorrichtung, insbesondere eine Ladespule beispielsweise zum Einbringen eines korrespondierenden Ferritkerns.

Eine Kombination der beiden Varianten ist ebenfalls möglich.

Der Ladevorrichtungsträger umfasst einen Ladevorrichtungsträgerkörper und ein Abschlussteil. Dabei umschliesst regelmässig der Ladevorrichtungsträgerkörper die Ladevorrichtung, jedenfalls teilweise, wobei die Ladevorrichtung nach aussen hin offen liegt, und klemmt diese (im montieren Zustand) ein, um einen sicheren Halt zu gewährleisten. Das Abschlussteil ist regelmässig derjenige Abschnitt des Ladevorrichtungsträgers, welcher einen Teil der äusseren Oberfläche des entsprechenden Geräts bildet bzw. den Abschluss der Oberfläche nach aussen hin bildet, d.h. insbesondere im hinteren Bereich des Geräts bzw. Handteils, wo sich auch die Ladevorrichtung befindet. Das Abschlussteil kann eine Schutzfunktion für die Ladevorrichtung erfüllen sowie auch eine Handlingfunktion, indem es für ein senkrechtes Aufstellen des entsprechenden Geräts ausgestaltet ist. Auf diese Weise kann insbesondere auch auf den üblichen Verschlussdeckel verzichtet werden.

Vorzugsweise ist der Ladevorrichtungsträger einteilig ausgebildet. Dies ist im Hinblick auf die Herstellung besonders effizient. Allerdings ist auch eine mehrteilige Ausgestaltung des Ladevorrichtungsträgers vorgesehen, wobei der Ladungsvorrichtungsträger zum einen ein separates Abschlussteil umfasst, welches mit dem Ladevorrichtungsträgerkörper verrastbar ist. Die Einschubeinheit bildet aber eine Einheit und wird als Ganzes, d.h. mit dem am Ladevorrichtungsträgerkörper verrasteten Abschlussteil in das Gehäuseinnere des Handteils des entsprechenden Geräts eingebracht.

Andererseits kann bei der mehrteiligen Ausbildung der Ladevorrichtungsträger ein separates Abschlussteil umfassen, welches auf den Ladevorrichtungsträgerkörper (gerade) aufsteckbar ist, d.h. im Wesentlichen formschlüssig mit ggf. einem Rast- oder Klemmsitz. Die Einschubeinheit kann wiederum als Ganzes, d.h. mit dem am Ladevorrichtungsträgerkörper aufgesteckten Abschlussteil in das Gehäuseinnere des Handteils des entsprechenden Geräts eingebracht werden.

Mittels des mehrteiligen Aufbaus können ggf. unterschiedlich ausgestaltete Abschlussteile verbaut werden, d.h. etwa verschieden grosse Standflächen oder aber spezifische unterschiedliche Designs.

Die Ladevorrichtung umfasst eine, vorzugsweise hakenförmige, Rastgeometrie, welche konfiguriert ist im montierten Zustand eine Verrastung der Ladevorrichtung gegenüber dem Ladevorrichtungsträgerkörper zu bewirken. Weiter wird die Ladevorrichtung in den Ladevorrichtungsträgerkörper eingepresst, wobei ein Formschluss passiert, welcher eine Abdichtung der Ladevorrichtung gegenüber dem Ladevorrichtungsträgerkörper bewirkt. Die innere Oberfläche des Ladevorrichtungsträgerkörpers ist vorzugsweise korrespondierend ausgebildet und unterstützt somit die Verpressung und Abdichtung (z.B. durch eine Verjüngung in Einführrichtung). Dies dient dem Schutz des Gehäuseinnenraums sowie der Ladevorrichtung selbst.

Vorzugsweise weist der Ladevorrichtungsträgerkörper eine erste Dichtzone gegenüber einem Gehäuse eines Handteils auf, vorzugsweise in Form einer ersten Nut zur Aufnahme eines ersten Dichtungselements (z.B. eines O-Rings), welche konfiguriert sind, im montierten Zustand eine Abdichtung der Einschubeinheit gegenüber der Gehäusewand des Handteils zu bewirken. Auf diese Weise kann ein Eindringen von Wasser bzw. von Feuchtigkeit und von Verunreinigungen wirksam verhindert werden.

Vorzugsweise weist der der Ladevorrichtungsträgerkörper eine zweite Dichtzone gegenüber einem Gehäuse eines Handteils auf, vorzugsweise in Form einer zweiten Nut zur Aufnahme eines zweiten Dichtungselements (z.B. eines O-Rings), welche konfiguriert sind, im montierten Zustand eine Abdichtung der Einschubeinheit gegenüber der Gehäusewand des Handteils zu bewirken. Dieses zweite Dichtungselement ist in Einführrichtung der Einschubeinheit gesehen vor dem ersten Dichtungselement angeordnet und sorgt ggf. für eine zusätzliche Abdichtung. Es ist grundsätzlich allerdings auch denkbar nur das zweite (innere) Dichtungselement zu verwenden.

Vorzugsweise weist, bei einer mehrteiligen Ausgestaltung des Ladevorrichtungsträgers (d.h. insbesondere bei der Aufsteckvariante für das Abschlussteil), der Ladevorrichtungsträgerkörper eine Dichtzone gegenüber dem Abschlussteil auf, vorzugsweise in Form einer Nut zur Aufnahme eines Dichtungselements (z.B. eines O-Rings), welche konfiguriert ist im montierten Zustand eine axiale Abdichtung des Ladevorrichtungsträgerkörpers gegenüber dem Abschlussteil zu bewirken. Diese Dichtzone bewirkt bei der mehrteiligen Ausgestaltung einen zusätzlichen Schutz. Weiter vorzugsweise weist hier zudem das Abschlussteil eine Dichtzone gegenüber dem Gehäuse eines Handteils auf, vorzugsweise in Form einer Nut zur Aufnahme eines Dichtungselements (z.B. eines O-Rings), welche konfiguriert ist im montierten Zustand eine seitliche Abdichtung der Einschubeinheit gegenüber der Gehäusewand des Handteils zu bewirken. Durch diese doppelte Abdichtung kann ein optimaler Schutz für diese Variante der mehrteiligen Ausgestaltung des Ladevorrichtungsträgers erzielt werden.

Generell können Dichtungselemente auch als angespritzte Elemente aus Weichkomponente realisiert werden, sodass auf eine Montage des Dichtungselements verzichtet werden kann, da das Element im Spritzgussprozess bereits angespritzt wird ist.

Vorzugsweise bilden die Ladevorrichtung und/oder der Ladevorrichtungsträgerkörper einen Teil der äusseren Oberfläche des Handteils, welcher im Wesentlichen senkrecht zur Längsachse des Handteils verläuft. Hierdurch kann eine effektive Standfläche für ein senkrechtes Aufstellen des Geräts geschaffen sowie die offene Zugänglichkeit der Ladevorrichtung gewährleistet werden.

Vorzugsweise bildet das Abschlussteil des Ladevorrichtungsträgers einen Teil der äusseren Oberfläche des Handteils. Hierdurch kann das Abschlussteil insbesondere ein im Wesentlichen ringförmiges Schutzelement für die Ladevorrichtung (insbesondere den Ladebuchsenstift) ausbilden, welches gleichzeitig eine Einführöffnung für etwa einen Stecker eines entsprechenden Netzteils definiert. Auch hier ist bevorzugt die Ausgestaltung so, dass ein senkrechtes Abstellen des Geräts sicher gewährleistet ist.

Vorzugsweise sind auf dem Ladevorrichtungsträgerkörper eine oder mehrere Rastnasen angeordnet, welche konfiguriert sind im montierten Zustand in korrespondierende Rastausnehmungen in der Gehäusewand des Handteils einzurasten. Auf diese Weise wird eine robuste Verankerung der Einschubeinheit am Gehäuse erreicht.

Vorzugsweise weisen die Rastnasen eine keilartige Form mit einer Einführschräge, einem horizontal verlaufenden Teil und einer im Wesentlichen senkrecht abschliessenden Rückwand auf. Diese Ausgestaltung hat sich als besonders effektiv erwiesen, da die Rastnasen mit der Rückwand hinten (d.h. entgegen der Einführrichtung) an den korrespondierenden Wänden der Rastausnehmungen in der Gehäusewand anliegen.

Vorzugsweise ist Ladevorrichtungsträger mittels eines Federlagers federnd an einer Stützstruktur (der Einschubeinheit) gelagert. Insbesondere umfasst dabei das Federlager einen ersten Federbügel und einen zweiten Federbügel, welche vorzugsweise unabhängig voneinander zwischen dem Ladevorrichtungsträger und der Stützstruktur angeordnet sind. Auf diese Weise kann eine besonders effektive Längenausgleichsfunktion bereitgestellt werden (gemäss dieser Ausführungsform drückt der Ladevorrichtungsträger gegen das Abschlussteil und somit die Einschubeinheit in das Gehäuse hinein).

Bevorzugte Komponenten ohne Antrieb, welche an der Einschubeinheit realisiert werden können und im bzw. am Gerät verbaut sind umfassen Bewegungsdetektoren wie etwa Gyroskope oder Bewegungssensoren und Beleuchtungsmittel wie etwa Infrarotlampen. Entsprechend kann auch ein Produkt ohne Antrieb mit anderen elektrischen Komponenten mit einer entsprechenden Einschubeinheit realisiert werden.

Ein weiterer Aspekt der Erfindung umfasst ein Handteil für ein elektrisches Körperpflegegerät, insbesondere für eine elektrische Zahnbürste, welches ein Gehäuse und eine Einschubeinheit gemäss den vorstehenden Spezifikationen aufweist.

Ein nochmals weiterer Aspekt der vorliegenden Erfindung umfasst ein elektrisches Körperpflegegerät, insbesondere eine elektrische Zahnbürste, welche ein Handteil gemäss den vorstehenden Spezifikationen aufweist.

Im Folgenden werden weitere bzw. ergänzende bevorzugte Ausführungsformen für die einzelnen Bauteile bzw. Komponenten beschrieben.

Das Gehäuse des Handteils dient generell zur Positionierung und Führung der Einschubeinheit, was jedenfalls teilweise durch die Form des Einschubträgers und/oder der gesamten (d.h. bestückten) Einschubeinheit und die Platzgestaltung innerhalb des Gehäuses vorgegeben wird. Dabei sind nicht zwingend separate Führungen bzw. Positionierelemente notwendig, vielmehr kann dies allein durch die geometrische Gestaltung des Einschubträgers und/oder der bestückten Einschubeinheit selbst bestimmt werden.

Mögliche Positionier- oder Führungselemente, welche zum Sicherstellen der Kraftübertragung zwischen Gehäuse und Einschubeinheit vorgesehen sind, müssen dafür sorgen, dass sich die Einschubeinheit nicht im Gehäuse drehen kann und dass gleichzeitig die Einschubeinheit eindeutig positioniert wird.

Die nachfolgenden Ausführungen gelten insbesondere im Zusammenhang mit dem einteiligen Aufbau der Einschubeinheit bzw. dem entsprechenden Ladevorrichtungsträger.

Hier sind als bevorzugte Elemente vorgesehen Rastausnehmungen im Gehäuse bzw. der Gehäuseinnenwand, welche in der Hartkomponente bzw. der Hartplastikschale realisiert sind und allenfalls noch mit Weichkomponente versehen sind. Die Positionierung der Rastausnehmungen in Längsrichtung, gemessen von der Seite des offenen Gehäuseendes (Einführende) her, erfolgt in den hinteren 50 % der Länge der Einschubeinheit vorzugsweise in den hinteren 30 % der Länge der Einschubeinheit (d.h. entlang der Längsachse der Einschubeinheit).

Die Positionierung in Umfangsrichtung ist so, dass die Rastausnehmungen regelmässig oder unregelmässig entlang des Umfangs angeordnet sein können, bevorzugt wird jedoch eine symmetrische Anordnung (d.h. oben gegenüber unten bzw. vorne gegenüber hinten). Die Rastausnehmungen sind vorzugsweise vorne (in Richtung Oberseite) und hinten (in Richtung Rückseite) angeordnet; der Winkel zwischen den Rastausnehmungen von der Längsachse bzw. Grundlinie her gemessen beträgt zwischen 20° und 90° vorzugsweise zwischen 30° und 60°.

Die Abmessungen der Rastausnehmungen im Gehäuse betragen hinsichtlich der Länge in Richtung der Längsachse von 0.3 mm bis 3 mm, vorzugsweise von 0.5 mm bis 2 mm. Die Breite in Querrichtung gemessen beträgt von 1 mm bis 5 mm vorzugsweise von 1.5 mm bis 4 mm.

Das Loch bzw. die Rastausnehmung ist vorzugsweise von aussen her nicht offen und grundsätzlich in der Hartkomponente bzw. Hartplastikschale des Gehäuses realisiert und zwar beispielsweise als Sackloch. Im Falle einer Realisierung als Durchgangsloch in der Hartkomponente kann die Weichkomponente etwa einen Teil des Durchgangslochs verschliessen, dabei kann die Weichkomponente so angeordnet sein, dass diese durch die Rastnase später jedenfalls zum Teil verdrängt wird.

Die Tiefe im fertigen Gehäuse beträgt von 0.2 mm bis 2 mm vorzugsweise von 0.3 mm bis 1 mm.

Die Anzahl der Rastausnehmungen beträgt von 2 bis 8 vorzugsweise von 3 bis 4.

Die Rastausnehmungen weisen vorzugsweise einen symmetrischen Aufbau auf (d.h. in Bezug auf die Längsachse bzw. einer Ebene die die Längsachse beinhaltet) oder einen regelmässigen Aufbau (d.h. in Bezug auf die Querschnittsebene und die Einteilung in den Winkeln).

Für die Form der Rastausnehmungen gilt grundsätzlich, dass bei der Herstellung bedacht werden muss, dass eine entsprechende Entformung möglich ist. Der Grundriss der Rastausnehmungen ist in der Regel rechteckig vorzugsweise oblongförmig (d.h. sie weisen eine abgerundete, annähernd rechteckige Form auf). Dabei sind die Rastausnehmungen vorzugsweise derart ausgeformt, dass senkrecht zur Längsachse des Handteils bzw. des Gehäuses eine gerade Wand steht. Diese dient im montierten Zustand dem Zusammenspiel mit der zugehörigen Rastnase.

In der Tiefe ist die Form bevorzugt ein gerader Zylinder bzw. eine zylindrische Form auf rechteckiger bzw. oblong-förmiger Basis. Denkbar ist auch eine kegelförmige oder kegelstumpfförmige Ausgestaltung.

Hinsichtlich der Führung, Positionierung und Kraftübertragung ist anzumerken, dass die Einschubeinheit in das Gehäuse des Handteils eingeschoben wird, wobei die Positionierung und der Anschlag bevorzugt in einem realisiert sind. Eine Verdrehung der Einschubeinheit wird durch die Geometrie bzw. die Querschnittsform des Einschubs verhindert. Mit anderen Worten wird eine eindeutige Positionierung vorgegeben, vor allem die Form im vorderen Teil der Einschubeinheit gibt dabei die Ausrichtung massgeblich vor.

Die Einschubeinheit liegt in verschiedenen Bereichen am Gehäuse an. Dabei sind Längsführungen realisiert, welche mit hervorstehenden Elementen das Ausrichten des Einschubs definieren. Die Endposition wird nur bei einem korrekten Einführen erreicht, dabei steht der (Vibrations-) Motor vorne am Gehäuse an. Insbesondere steht der Motor mit dem Gehäuse in einem, vorzugsweise spitzen, Winkel zur Längsachse, wobei der Anschlag flächig im Winkel zur Längsachse im Gehäuse realisiert ist.

Bei korrektem Einführen rasten die Rastnasen in die korrespondierenden Rastausnehmungen ein, wenn der Anschlag erreicht wird, d.h. es kommt zu einem Anliegen vorne am Gehäuse sowie zu einem Einrasten (vorzugsweise hinten) der Rastnasen in die Rastausnehmungen am Gehäuse.

Die Fixierung der Einschubeinheit mit ihren einzelnen Bauteilen, passiert bevorzugt mittels einer Verspannung zwischen Rastung und Anschlag. Dazwischen ist die Einschubeinheit bzw. sind die einzelnen Bauteile grösstenteils freigestellt, d.h. es erfolgt allenfalls nur ein punktuelles Anliegen am Gehäuse.

Die Kraftübertragung erfolgt dabei über die Geometrie des Einschubs. Die Rastungen sind seitlich freigestellt, d.h. die Rastnasen liegen vorzugsweise seitlich nicht an die Rastausnehmungen an.

Bei einer Variante des mehrteiligen Aufbaus der Einschubeinheit bzw. des Ladevorrichtungsträgers (insbesondere bei oszillierend-rotierendem Antrieb) erfolgt das Halten der Einschubeinheit vorzugsweise über ein Verklemmen zwischen Abschlussteil und Gehäuse. Das Abschlussteil kann einen eigenen Verschluss, z.B. einen Schnappverschluss, aufweisen und dichtet das Gehäuse und den Einschub ab. Die Dichtung erfolgt vorzugsweise mittels zwei O-Ringen, welche je nach Ausgestaltung am Ladevorrichtungsträger und/oder am Abschlussteil angeordnet sind.

Bei einer anderen Variante des mehrteiligen Aufbaus der Einschubeinheit wird die Einschubeinheit lediglich positioniert und gehalten, aber nicht gegen das Abschlussteil abgedichtet. Das Abschlussteil ist individuell gestaltet und hält bevorzugt an der Einschubeinheit oder aber am Gehäuse.

Weitere Gehäuseelemente umfassen etwa Interaktionselemente wie zum Beispiel einen oder mehrere Schalter aus Weichkomponente (d.h. unter anderem den Ein-/Aus-Schalter), welche für eine Interaktion mit Elementen bzw. Komponenten auf der Einschubeinheit vorgesehen sind. Es kann auch eine Ausnehmung für ein Druckausgleichselement vorgesehen sein, d.h. etwa ein Durchgangsloch mit einer Membran zur Ausgasung des Gehäuseinnenraums.

Die Einschubeinheit ist jeweils für sich alleine genommen funktionsfähig, d.h. man braucht keinen herkömmlichen Verschlussdeckel oder ähnliches, um den Stromkreis zu schliessen. Die Funktion kann ohne jegliche weiteren Elemente ausgeführt werden.

Die Einschubeinheit umfasst den Einschubträger für die Funktionselemente und gleichzeitig vorzugsweise auch eines oder mehrere Dichtungselemente zur Abdichtung des Innenraums des Gehäuses. Ein Teil der Einschubeinheit bzw. des Ladevorrichtungsträgers (vorzugsweise das Abschlussteil) bildet zudem einen Teil der äusseren Produktoberfläche. Die Aussenkontur des Produkts wird mit der Einschubeinheit bzw. dem Ladevorrichtungsträger fortgesetzt, so dass sich eine kontinuierliche Oberfläche ergibt (d.h. insbesondere ohne Einkerbungen etc.).

Beim einteiligen Aufbau (vorzugsweise beim schwenkend-oszillierenden Antrieb) ist der Ladevorrichtungsträger (zusammen mit dem restlichen Einschubträger) aus einem Teil gefertigt, die verschiedenen Bauteile sind daran montiert. Die Einschubeinheit reicht im Wesentlichen über die gesamte Länge des Gehäuses. Elemente, welche einen Teil der Aussengeometrie bilden, d.h. vor allem das Abschlussteil des Ladevorrichtungsträgers oder der Ladevorrichtungsträgerkörper oder die Ladevorrichtung selbst, sind am hinteren Ende des geformt, da die Einschubeinheit mit dem Motor bzw. dem Exzenter voran in die Einführöffnung des Handteils eingebracht wird.

Die Verankerung und Fixierung der Einschubeinheit erfolgt gegenüber dem Gehäuse. Die Montage besteht im Einschieben der Einschubeinheit bis zum Einrasten derselben im bzw. am Gehäuse. Hierdurch entsteht eine irreversible Fixierung, d.h. der Einschub ist nach der Montage nicht mehr zerstörungsfrei demontierbar. Die Verankerung bzw. Fixierung erfolgt in den Rastausnehmungen in der Gehäusewand.

Am Einschub selber sind dazu entsprechende Rastnasen angeordnet welche in die Ausnehmungen im bzw. am Gehäuse einrasten, wobei die vorbeschriebenen Ausnehmungen das Gegenstück zu den Rastnasen darstellen.

Der Aufbau der Rastnasen ist, entgegen der Einführrichtung betrachtet, keilförmig. Die Rastnasen umfassen dabei zunächst eine Einführschräge bzw. Rampe welche einen Winkel Alpha gegenüber der Längsachse (bzw. eine Schräge gegenüber der Grundlinie im Festmaterial) definiert, in einem Bereich von 10° bis 75° vorzugsweise von 15° bis 35°.

Die Länge L₁ der Grundlinie der Einführschräge beträgt (im Geraden parallel zur Längsachse gemessen) von 0.3 mm bis 3 mm vorzugsweise von 0.5 mm bis 1.5 mm.

Die Höhe H der Einführschräge bzw. Rampe beträgt von 0.1 mm bis 1.5 mm vorzugsweise von 0.25 mm bis 0.5 mm. Die Höhe nimmt dabei stetig zu und geht dann in den horizontalen Teil über.

Der horizontale Teil weist (parallel zur Einschubrichtung) eine Grundlinie mit einer Länge L₂ von 0.1 mm bis 1 mm vorzugsweise von 0.15 mm bis 2 mm auf. Die Höhe H beträgt zwischen 0.1 mm bis 1.5 mm vorzugsweise von 0.25 mm bis 0.5 mm (d.h. entsprechend dem höchsten Punkt der Einführschräge).

Die hintere, senkrechte Wand (senkrecht zur Längsachse bzw. zur Einführrichtung) dient dem eigentlichen Einrasten in die Rastausnehmungen im Gehäuse und weist entsprechend auch die Höhe H auf.

Die Gesamtabmessung der Einführschräge bzw. Rampe beträgt demnach in der Länge L₁ plus L₂ von 0.4 mm bis 4 mm vorzugsweise von 0.65 mm bis 3.5 mm, in der Breite (d.h. quer zur Längsachse bzw. zur Einführrichtung) von 0.5 mm bis 3 mm vorzugsweise von 0.8 mm bis 2 mm und in der Höhe von 0.1 mm bis 1.5 mm vorzugsweise von 0.25 mm bis 0.5 mm.

Die Rastnasen können gefedert ausgebildet sein. Die Federung wird ggf. dadurch erreicht, dass die Rastnasen auf einem federnden Untergrund aufgebracht sind. D.h. der Ladevorrichtungsträger bzw. der Ladevorrichtungsträgerkörper weist federnde Elemente bzw. Bereiche auf, welche die Rastnasen tragen. Beispielsweise durch eine U-förmige Freistellung des Untergrunds, der die Rastnasen trägt.

Die Anzahl der Rastnasen entspricht vorzugsweise der Anzahl der Rastausnehmungen, es können aber auch mehr Rastausnehmungen als Rastnasen realisiert sein. Jede Rastnase schnappt aber in eine Rastausnehmung ein. Die Anzahl der Rastausnehmungen beträgt von 2 bis 8 vorzugsweise von 3 bis 4.

Die Position der Rastnasen ist generell abgestimmt auf die Rastausnehmungen im bzw. am Gehäuse. Auf der Einschubeinheit ist die Positionierung abhängig von der Position der Einschubeinheit gegenüber dem Gehäuse und den weiteren Bauteilen an der Einschubeinheit.

Die Einschubeinheit bzw. der Einschubträger umfasst verschiedene Trägerbereiche bzw. Trägerzonen für die Montage verschiedener Bauteile an der Einschubeinheit. Hierbei ist vorgesehen, dass elektrische Elemente mit- bzw. untereinander einander elektrisch verbunden sind. Die einzelnen Bereiche des Einschubträgers werden nachfolgend im Einzelnen beschrieben.

Der Motorträger (Motorzone) ist dabei für die Anbringung des Motors vorgesehen, wobei der Motor beispielsweise in der geneigten Position gehalten und fixiert wird. Die Montage erfolgt von vorne. Der Exzenter ragt aus der Zone für den Motor und damit aus dem Einschubträger hinaus.

Der Schalterträger (Schalterzone) ist für die Montage des Ein-/Aus-Schalters vorgesehen. Die Montage erfolgt von vorne. Der Schalterträger befindet sich in der Regel direkt im Anschluss an den Motorträger bzw. zwischen dem Motorträger und dem Akkuträger

Der Akkuträger (Akkuzone) dient zur Anbringung des Akkus. Der Akku ist beispielsweise mittels angelöteten Kontaktblechen mit der Printplatte verbunden und die Halterung des Akkus erfolgt klemmend am Akkuträger, welcher im montierten Zustand zwischen dem Akku und der Printplatte liegt. Die Montage des Akkus erfolgt von der Oberseite. Der Akkuträger ist zwischen dem Schalterträger und dem Ladevorrichtungsträger angeordnet. An den Akkuträger kann sich auch ein Verbindungsträger anschliessen, welcher einen Leerraum enthält für die Führung der elektrischen Leitungen bzw. Kabel zur Buchse oder aber für den Ausgleich verschiedener Akkulängen.

Die Montage der Ladevorrichtung an dem Ladevorrichtungsträger bzw. dem Ladevorrichtungsträgerkörper erfolgt entlang der Längsachse der Einschubeinheit. Innen ist etwa die Ladebuchse angeordnet und Aussen sind die Dichtungselemente und die Rastnasen angeordnet. Die Montage der Dichtungselemente (O-Ringe) erfolgt vom Motor her entlang der Längsachse (d.h. entgegen der Einführrichtung) und die Montage der Buchse erfolgt von hinten her entlang der Längsachse (d.h. in Einführrichtung). Der Ladevorrichtungsträger umfasst auch das Abschlussteil, welches den hinteren Abschluss des Handteils bildet und einen Teil der Aussenoberfläche bildet.

Der Printplattenträger (Printzone) trägt die Printplatte, wobei die Printplatte über mehrere der anderen Trägerzonen hinweg verläuft. Die Montage erfolgt entsprechend von der Rückseite her.

Im Hinblick auf die Ladefunktionalität gibt es für die Energiequelle bzw. den Akku eine gesteckte Lösung sowie eine induktive Lösung, d.h. einmal wird das Gerät durch direktes Einstecken geladen (d.h. etwa als Netzgerät mit Stecker oder aber mittels Stecker ab PC, z.B. USB Stecker) und andererseits kann ein induktives Ladegerät vorgesehen werden mit welchem das Gerät (ohne Steckkontakt) geladen werden kann.

Im Falle einer Ladebuchse (beschrieben wird die Integration im Produkt) kann diese eine Standardvorrichtung umfassen, also etwa eine Standardbuchse für Netzgerätestecker. Als Varianten kämen in Frage USB, USB-C und Lightning-Stecker. Im Prinzip können Stecker von beliebiger Grösse verwendet werden. Voraussetzung ist jedoch, dass eine Dichtung mit zumindest IPX7 Schutzart-Standard vorgesehen ist.

Der Ladevorrichtungsträger ist am hinteren Ende der Einschubeinheit realisiert. Die Ladebuchse ist weiterhin im montierten Zustand vorzugsweise vertieft im Ladevorrichtungsträgerkörper angeordnet. Die Ladebuchse bleibt dabei grundsätzlich offen zugänglich. Die Anordnung in der vorzugsweise durch das Abschlussteil gebildeten Vertiefung bietet bereits einen gewissen Schutz vor Wasser, Feuchtigkeit oder Verunreinigungen.

Der Ladevorrichtungsträger ist vorzugsweise parallel zur Längsachse des Gehäuses realisiert. Das Abschlussteil wird grundsätzlich nicht verschlossen (ausser es ist die oben beschriebene Abdeckung vorgesehen), sondern bleibt von aussen her zugänglich. Die Dichtung der Ladebuchse selbst genügt wiederum dem IPX7 Schutzart-Standard.

Grundsätzlich kann anstelle einer Ladebuchse als Ladevorrichtung ein Spulenkörper (für die Einschubeinheit) im Ladevorrichtungsträger integriert sein, welcher für eine induktive Ladung genutzt werden kann. Der Ladevorrichtungsträger ist in diesem Fall geschlossen, da keine Öffnung für die Ladebuchse bzw. den entsprechenden Stecker des Netzteils benötigt wird. Damit ist auch kein Loch im Abschlussteil nötig und eine entsprechende Dichtzone entfällt dadurch.

Im Folgenden wird auf Dichtungsfunktionen im Zusammenhang mit der vorliegenden Erfindung eingegangen.

Ziel ist es, generell eine Abdichtung gegen Wasser- bzw. Feuchtigkeitseintritt und Verunreinigungen bereitzustellen. Die Abdichtung erfolgt direkt an der Einschubeinheit, wobei beim einteiligen Aufbau kein separates Abschlussteil zum Dichten benötigt wird.

Hierfür kommen, je nach Aufbau der Einschubeinheit bzw. des Ladevorrichtungsträgers, folgende Dichtzonen in Betracht.

Zunächst ist vorzugsweise eine Abdichtung der Ladevorrichtung bzw. der Ladebuchse gegenüber dem Ladevorrichtungsträger vorgesehen, wobei die Dichtung um die Ladebuchse herum erfolgt. Dabei wird die Ladebuchse in den Einschub hineingepresst, so dass eine Verpressung zwischen Ladebuchse und Material stattfindet. An der Ladebuchse sind diesbezüglich bevorzugt Rastgeometrien bzw. Rasthaken vorgesehen. Die Ladebuchse ist somit im Ladevorrichtungsträger verkrallt. Die Dichtung erfolgt zusätzlich durch die Passung der im Ladevorrichtungsträger verpressten Ladebuchse.

Weiterhin erfolgt bevorzugt eine Abdichtung der Einschubeinheit bzw. des Ladevorrichtungsträgers gegenüber dem Gehäuse, welche in der Regel als Nut mit eingelegtem O-Ring realisiert ist, der gegen die Gehäusewand drückt und abdichtet.

Des Weiteren ist auch eine Ausführung mit doppelter Dichtung möglich. Hier sind dann zwei Nuten an der Einschubeinheit bzw. am Ladevorrichtungsträger vorgesehen, wobei in jede Nut ein O-Ring eingelegt ist, so dass eine zweifache Abdichtung erreicht wird.

Im Optimalfall ist allerdings nur eine Nut erforderlich und zwar bevorzugt diejenige welche gegen das freie bzw. hintere Ende der Einschubeinheit bzw. des Ladevorrichtungsträgers angeordnet ist. Um die Dichtigkeit zu verbessern kann aber die zweite Dichtung sicherheitshalber zusätzlich vorgesehen werden. Beide Nuten sind regelmässig in der fertigen Einschubeinheit bzw. dem fertigen Ladevorrichtungsträger realisiert, müssen aber eben nicht unbedingt beide benutzt werden.

Vorzugsweise wird nur diejenige Dichtung genutzt welche näher zum freien bzw. hinteren Ende des Handteils hin gelegen ist. Es ist grundsätzlich aber auch denkbar, nur die vom freien bzw. hinteren Ende des Handteils weg gelegene Nut (alleine) zu nutzen.

Bei der Ausführungsform mit dem zweigeteilten Ladevorrichtungsträger (Aufsteckvariante) drückt der Ladevorrichtungsträgerkörper gegen das Abschlussteil, wobei die Dichtung zwischen der Einschubeinheit und dem Abschlussteil gebildet wird. Die Dichtung kann durch Passung erfolgen (über die Anlagefläche) oder aber mittels eines Dichtungsrings in einer Nut am Ladevorrichtungsträgerkörper, wobei hier die Dichtung durch Verpressung erfolgt. Darüber hinaus kann das Abschlussteil gegenüber dem Gehäuse abdichten. Die Dichtposition ist dabei entweder seitlich gegenüber der Gehäusewand oder am hinteren Ende des Gehäuses angeordnet.

Eine weitere Abdichtung umfasst ein Druckausgleichselement, welches etwa als eine auf ein Loch im Gehäuse aufgebrachte Membrane ausgeführt ist. Die Funktion des Druckausgleichselements ist das Ausgasen des Akkus zu ermöglichen, d.h. es soll die Möglichkeit geschaffen werden, dass Gas via Membrane aus dem Gehäuseinnenraum austreten kann.

Die Komponenten des Druckausgleichselements umfassen eine Membrane von einem Durchmesser von etwa 5 mm sowie ein Durchgangsloch durch das Gehäuse mit einem Durchmesser von etwa 1 mm. Hierdurch wird ein Gasaustritt ermöglicht und ein Eindringen von Wasser verhindert.

Das Druckausgleichselement kann sich seitlich in der Gehäusewand befinden, wobei hier zu beachten ist, dass eine Applikation auf ebener Fläche zu bevorzugen ist, da so eine bessere Klebung möglich ist als auf einer gebogenen Fläche.

Alternativ kann das Druckausgleichselement auch hinten am bzw. im Abschlussteil angeordnet sein.

Bei Produkten, bei denen die Antriebseinrichtung aus dem Gehäuse herausragt, wie etwa bei rotierend-oszillierenden Zahnbürsten, sind noch zwei weitere Abdichtungen vorgesehen, nämlich einmal zwischen Gehäuse und Einschubeinheit bzw. Einschubträger im Austrittsbereich der Antriebseinrichtung und ausserdem zwischen Einschubeinheit bzw. Einschubträger und Antriebswelle im Austrittsbereich der Antriebseinrichtung.

Bei Produkten mit einem mehrteiligen Aufbau des Ladevorrichtungsträgers ist noch eine weitere Zone zwischen Abschlussteil und Gehäuse vorgesehen.

Als Dichtmöglichkeiten können O-Ringe und/oder angespritzte Elemente vorgesehen sein. Die O-Ringe sind dabei aus Silikon oder vorzugsweise Acryl-Nitril-Butadien Kautschuk (NBR) hergestellt.

Die Abmessungen der O-Ringe der Dichtung in hinteren Bereich des Einschubträgers betragen dabei im Hinblick auf den Durchmesser des Rings (d.h. in der Mitte des Stranges) von 10 mm bis 20 mm vorzugsweise von 13 mm bis 16 mm. Der Durchmesser des Stranges selbst beträgt von 1 mm bis 5 mm vorzugsweise von 1.5 mm bis 3.5 mm.

Die angespritzten Elemente als weitere Möglichkeit zur Abdichtung sind am Gehäuse oder an der Einschubeinheit bzw. dem Einschubträger vorgesehen und zwar insbesondere als zweite Dichtung zwischen Einschubeinheit bzw. dem Einschubträger und Gehäuse (d.h. insbesondere bei einem einteiligen Aufbau des Ladevorrichtungsträgers). Dabei liegt das Abschlussteil am Gehäuse an. Am Gehäuse ist die Weichkomponente bis in den Berührungsbereich ausgeformt und das Abschlussteil liegt an der Weichkomponente an, so dass eine weitere Abdichtungsmöglichkeit geschaffen wird.

Generell können Dichtungselemente auch als angespritzte Elemente aus Weichkomponente realisiert werden, sodass auf eine Montage des Dichtungselements verzichtet werden kann, da das Element im Spritzgussprozess bereits angespritzt wird ist.

Der Einschubträger ist regelmässig aus Hartkomponente geformt, vorzugsweise aus POM. Dies hat den Vorteil, dass die Masshaltigkeit gegeben ist, keine Wasseraufnahme erfolgt (was sich in der Genauigkeit niederschlägt) und insgesamt eine konstantere Dichtung durch eine genauere Positionierung erreicht wird.

Weitere optionale Merkmale sehen vor, dass das Gerät alleine senkrecht stehen kann. Das hintere Ende des Gehäuses ist dabei derart ausgestaltet, dass das Gerät auf eine ebene Fläche gestellt werden kann und die Längsachse des Handteils senkrecht zu der Fläche steht. Die hintere Endfläche des Abschlussteils ist daher flach ausgestaltet. Vorzugsweise sind auf die hintere Endfläche Materialien aufgebracht, welche den Grip erhöhen bzw. eine gewisse Oberflächenhaftung aufweisen.

Weiterhin kann eine Schutzkappe realisiert sein, d.h. kein herkömmlicher Verschlussdeckel, denn die Ladebuchse soll grundsätzlich offen zugänglich bleiben. Falls jedoch eine Abdeckung nötig sein sollte, kann beispielsweise eine Schutzkappe aus Weichkomponente vorgesehen werden, welche in die Einführöffnung gesteckt werden kann, um etwa die Ladebuchse vor Wasser- und Schmutzeintritt zu schützen.

Die Schutzkappe kann dabei als separates Teil realisiert sein oder sie kann am Gehäuse angespritzt werden, wobei die Schutzkappe dann vorzugsweise über eine Materialbrücke mit dem Gehäuse verbunden ist. Diese Verbindung ist permanent und hält die Schutzkappe am Gehäuse.

Im Folgenden soll nunmehr auch auf wesentliche Aspekte der Aufsteckbürsten für entsprechend gemäss der vorliegenden Erfindung ausgestaltete elektrische Zahn- oder sonstige Bürsten bzw. Körperpflegegeräte eingegangen werden.

Für die erfindungsgemässen Aufsteckbürsten werden bevorzugt (konventionelle) extrudierten Borsten verwendet, d.h. sowohl in zugespitzter als auch in zylindrischer Form, aus Hart- und/oder Weichkomponente gebildet und zwar bevorzugt aus Polyamid (PA) oder Polyester (PBT).

Die Herstellung kann durch Extrusion eines Materials oder durch Extrusion von mehr als einem Material (Co-Extrusion) erfolgen. Im Gegensatz zu gespritzten Borsten oder gummielastischen Massage- und/oder Reinigungselementen, welche mittels Spritzguss hergestellt sind, werden konventionelle Borsten extrudiert, geschnitten und ggf. bearbeitet bevor sie am Borstenträger anhand eines geeigneten Verfahrens eingesetzt werden.

Die Längsform der Borsten bzw. Borstenfilamente kann zylindrisch, mechanisch oder chemisch zugespitzt (vor allem bei Polyester (PBT)), gewellt, gedreht und/oder wendelförmig sein.

Bevorzugte Querschnittsformen sind kreisförmig, rund, dreieckig, rechteckig, quadratisch, elliptisch, polygonförmig, trapezförmig, parallelogrammförmig oder rhombusförmig.

Für Mundhygiene-Produkte beträgt dabei ein Durchmesser von 0,075 mm bis 0,25 mm und eine Querschnitts-Fläche von 0. 002 mm² bis 0.2 mm². Der Durchmesser beschreibt den kleinsten Kreis welcher um die Querschnittsform der Borste gebildet werden kann.

Für Kosmetik-Produkte, die im vorliegenden Rahmen ebenfalls vorstellbar sind als Aufsteckbürsten, reicht ein Durchmesser von 0,025 mm bis 0,2 mm und eine Querschnitts-Fläche von 0.001 mm² bis 0.15 mm².

Die Oberfläche der Borsten ist vorzugsweise glatt oder texturiert. Die Borsten werden regelmässig in Bündeln zusammengefasst.

Es können in bevorzugten Ausführungsformen auch Zungenreiniger an den Aufsteckbürsten vorgesehen sein, welche aus Hartkomponenten und/oder aus Weichkomponenten und/oder Kombinationen von Hartkomponenten und Weichkomponenten und/oder Material für gespritzte Borsten gebildet sind. Die Herstellung der Zungenreiniger erfolgt regelmässig im Spritzgussverfahren.

Die im Rahmen der vorliegenden Erfindung bevorzugt als Hartkomponenten verwendeten Kunststoffe umfassen generell Styrolpolymerisate wie Styrolacrylnitril (SAN), Polystyrol (PS), Acrylnitrilbutadienstyrol (ABS), Styrolmethylmethacrylat (SMMA) oder Styrolbutadien (SB); Polyolefine wie Polypropylen (PP) oder Polyethylen (PE) (vorzugsweise auch in Form von High Density Polyethylen (HDPE) oder Low Density Polyethylen (LDPE)); Polyester wie Polyethylenterephthalat (PET) in Form von säuremodifiziertem Polyethylenteraphthalat (PETA) oder glycolmodifiziertem Polyethylenterephthalat (PETG) ,Polybutylenterephthalat (PBT), säuremodifiziertem Polycyclohexylendimethylenterephthalat (PCT-A) oder glycolmodifiziertem Polycyclohexylendimethylenterephthalat (PCT-G); Cellulosederivate wie Celluloseacetat (CA), Celluloseacetobutyrat (CAB), Celluloseproprionat (CP), Celluloseacetatphthalat (CAP) oder Cellulosebutyrat (CB); Polyamide (PA) wie PA 6.6, PA 6.10 oder PA 6.12; Polymethylmethacrylat (PMMA); Polycarbonat (PC); Polyoxymethylen (POM); Polyvinychlorid (PVC); Polyurethan (PUR) und/oder Polyamid (PA).

Polyethylen (PE) kann vorliegend sowohl als Hartkomponente als auch als Weichkomponente eingesetzt werden. Gleichermassen kann Polyurethan (PU) sowohl als Hartkomponente als auch als Weichkomponente eingesetzt werden.

Bevorzugt wird Polypropylen (PP) mit einem Elastizitätsmodul von 1000 bis 2400 N/mm², vorzugsweise von 1200 bis 2000 N/mm², und besonders bevorzugt von 1300 bis 1800 N/mm² verwendet.

Im Rahmen der vorliegenden Erfindung wird die Hartkomponente (bzw. Kombinationen davon) vorzugsweise für bzw. in instabilen strukturtragenden Elementen eingesetzt.

Dies sind beim elektrischen Zahnbürstenhandteil grundsätzlich etwa das Gehäuse, die Rahmeneinheit, das angespritzte Gelenkstück mit dem Gelenkzapfen, die Pleuelstange, der Exzenter, das Schlüsselelement und der Gehäusedeckel.

Für die erfindungsgemässe Aufsteckbürste sind dies grundsätzlich etwa der Kopfabschnitt, der Aufsteckabschnitt, der Halsabschnitt sowie der Borstenträger.

Werden mehrere Hartkomponenten eingesetzt (beispielsweise im Zwei- oder Mehr-Komponenten-Spritzguss) oder werden Materialien mittels Ultraschallschweissen verbunden, bilden die eingesetzten Hartkomponenten untereinander vorzugweise einen Materialschluss.

Alternativ können mehrere Materialien eingesetzt werden, welche im Zwei- oder Mehrkomponenten-Spritzguss keinen Materialschluss eingehen. Bei diesen Paarungen wird ein Formschluss vorgesehen (z.B. durch Hinterschnitte und/oder Durchbrüche sowie teilweise und/oder vollständige Umspritzung, etc.).

Die zweite verspritzte Hartkomponente schwindet dann bei der Abkühlung auf die erste verspritzte Hartkomponente auf und bildet eine Schwundverbindung. Beispiele für mögliche Hartkomponentenpaarungen, welche keinen Materialschluss eingehen sind Polypropylen und Polyester oder aber Polypropylen und Styrolacrylnitril.

Im Rahmen der vorliegenden Erfindung ist bzw. sind generell die Weichkomponente(n) aus einem thermoplastischem Styrolelastomer (TPE-S) (vorzugsweise einem Styrolethylenbutylenstyrolcopolymer (SEBS) oder Styrolbutadienstyrolcopolymer (SBS)); einem thermoplastischem Polyurethanelastomer (TPE-U); einem thermoplastischem Polyamidelastomer (TPE-A); einem thermoplastischem Polyolefinelastomer (TPE-O); thermoplastischem Polyesterelastomer (TPE-E) und/oder Silikonen gebildet.

Weichkomponenten kommen im Rahmen der vorliegenden Erfindung etwa bei gespritzten Borsten, bei Reinigungs- und Massageelementen auf dem Borstenträger einer Aufsteckbürste, bei Zungenreinigern auf oder am Borstenträger einer Aufsteckbürste oder aber als griffigkeitsfördernde Materialien am Handteil und/oder im Bereich der Schalter des Handteils zum Einsatz.

Polyethylen (PE) und Polyurethan (PU) können sowohl als Hartkomponente als auch als Weichkomponente eingesetzt werden. Weichkomponenten sind vorliegend besonders bevorzugt thermoplastische Elastomere (TPE's) mit einer Shore A Härte kleiner 90, vorzugsweise von kleiner 50 und noch weiter vorzugsweise von kleiner 30. Die Weichkomponenten bilden mit Hartkomponenten beim Überspritzen im Zwei- oder Mehrkomponenten-Spritzgiessverfahren bevorzugt einen Materialschluss.

Weiter vorzugsweise werden das bzw. die Material(ien) für die gespritzten Borsten gebildet aus thermoplastischen Polyurethan-Elastomeren (TPE-U). Die weisen gegenüber den Standard TPE bessere Fliesseigenschaften auf sowie eine schnellere Erstarrung (d.h. eine schnellere Kristallisation wobei sich die Molekülketten schon bei hohen Temperaturen verbinden).

Alternative Materialien umfassen etwa Polyethylen (PE), beispielsweise in Form von Low Density Polyethylen (LDPE) oder Linear Low Density Polyethylen (LLDPE) oder thermoplastische Polyester-Elastomere (TPE-E) oder aber thermoplastische Polyamid-Elastomere (TPE-A).

Die Materialien für gespritzte Borsten umfassen weiter vorzugsweise Weichkomponenten bevorzugt thermoplastische Elastomere und weisen eine Shore D Härte von 0 bis 100 vorzugsweise von 30 bis 80 auf. Für gespritzte Borsten werden spezielle Formen von Weichkomponenten eingesetzt, welche in der Regel höhere Shore Härten aufweisen als Weichkomponenten, aus welchen weichelastische Reinigungs-/Massageelemente oder Handgriffzonen oder etwa Zungenreiniger hergestellt werden.

Während dem Spritzgussprozess (z.B. einem Zwei- oder Mehrkomponenten-Spritzgiessverfahren) gehen die Materialien für gespritzte Borsten in der Regel mit den anderen eingesetzten Weich- und/oder Hartkomponenten (z.B. mit einem Trägerplättchen oder einem Borstenträger) keinen Materialschluss ein. Folglich wird für allfällige Verbindungen mit anderen Hart- beziehungsweise Weichmaterialien ein Formschluss vorgesehen (z.B. durch Hinterschnitte und/oder Durchbrüche sowie teilweise und/oder vollständige Umspritzungen, etc.). Das als zweites verspritzte Material für die gespritzten Borsten schwindet bei der Abkühlung auf das erste verspritzte Hart- oder Weichkomponente auf und bildet so eine Schwundverbindung.

Als spezielle Materialien können vorliegend generell auch zum Einsatz kommen sogenannte Biokunststoffe (also Kunststoffe, die aus nachwachsenden Rohstoffen bestehen) oder aber auch wasserlösliche Polymere.

Biokunststoffe bestehen mindestens teilweise aus Grundstoffen der folgenden Rohstoffe. Als Rohstoffe in Frage kommen vorliegend beispielsweise Mais, Hanf, Zucker, Rizinusöl, Palmöl, Kartoffeln, Weizen, Zuckerrohr, Kautschuk, Holz oder die Castor Pflanze/Wunderbaum. Beispiele von Grundstoffen umfassen Cellulose, Stärke, Milchsäure (PLA), Glucose, Chitin oder Chitosan.

Die Hauptgruppen der hier bevorzugten Biokunststoffe umfassen stärkebasierte Biokunststoffe, cellulosebasierte Biokunststoffe, Polyhydroxialkanoate (z.B. Polyhydroxibuttersäure (PHB)), Polymilchsäure (PLA) oder aliphatische/aromatische Copolyester. Weitere bevorzugte Biokunststoffe umfassen etwa Lignin-basierte Biokunststoffe.

Die vorliegende Erfindung findet insbesondere Anwendung bei Bürstenprodukten für die Körperpflege. Im Hinblick auf die Mundhygiene kommen insbesondere elektrische Zahnbürsten in Frage. Bei diesen kommen wiederum unterschiedliche Bewegungsformen zum Einsatz, wie etwa oszillierende, schwenkende, translatorische, vibrierende Bewegungen. Es sind hierbei allerdings auch Kombinationen und Überlagerungen möglich.

Andere elektrische Körperpflegegeräte betreffen insbesondere den Kosmetikbereich, wie beispielsweise Mascarabürsten, Nagellackpinsel, Gesichtsbürsten, Applikatoren und Massagegeräte.

Die elektrischen Zahnbürsten umfassen insbesondere mechanische Antriebe mit einem Getriebe (1:1 Getriebe oder Getriebe mit Übersetzung oder Untersetzung), einem Schwinganker oder einem Elektromotor. Die genaue Ausgestaltung ist abhängig von den gewünschten Geschwindigkeiten.

Als Energiespeicher kommen Einwegbatterien oder Akkumulatoren (Lithium-Ionen-Akkus oder Nickel-Metallhydrid-Akkus) zum Einsatz, die Ladung erfolgt ggf. induktiv oder direkt mit einer Steckverbindung.

Im Folgenden sollen relevante Herstell- und Beborstungsverfahren generell sowie auch anhand von diversen bevorzugten Ausgestaltungsvarianten beschrieben werden.

Das Spritzgiessen wird generell in einem Spritzgusswerkzeug (bzw. einer entsprechenden Maschine) vorzugsweise in Form eines Mehrkomponenten-Spritzgusses ausgeführt. Dabei können sich die Materialien verbinden und zwar durch Materialschluss oder durch Stoffschluss. Es ist aber auch möglich, dass sich die Materialien nicht verbinden, d.h. es wird etwa mittels Formschluss eine Schwundverbindung mit Beweglichkeit bzw. einem Gelenk erzeugt. Es können generell sowohl Heisskanal-, Kaltkanal- oder Co-Injektions-Verfahren angewandt werden. Die Lage der Anspritzpunkte kann dabei je nach Bauteil variieren, d.h. die Anspritzpunkte können vorne am Bauteil, mittig am Bauteil oder aber hinten am jeweiligen Bauteil angeordnet sein.

Bei den bevorzugten Beborstungsverfahren für die hier beschriebenen Bürstenköpfe handelt es sich insbesondere um Ankerstanzverfahren sowie um ankerlose Beborstungsverfahren.

Beim Ankerstanzverfahren wird zunächst der Grundkörper mit entsprechenden Sacklöchern für die Borsten gespritzt. Anschliessend werden die Borsten gefaltet und mittels Ankern, welche regelmässig aus Stanzdraht gebildet sind (bzw. von einem solchen abgetrennt werden), in den Sacklöchern befestigt. Für das Ankerstanzverfahren werden entsprechend neben den Borsten eine Stanzeinrichtung, ein Stanzwerkzeug, Stanzdraht bzw. Anker und entsprechende Formeinsätze benötigt.

Eine Variante des Ankerstanzens, welche vorliegend ebenfalls Anwendung finden kann, ist das sogenannte Schlingenstanzen. Hierbei werden die Borsten mittels von Drahtschlingen, welche ebenfalls aus Stanzdraht gebildet werden, eingeschnürt und in die Sacklöcher eingebracht.

Bei den ankerlosen Beborstungsverfahren werden die Borsten dagegen nicht gefaltet und es wird kein Stanzdraht verwendet. Die Borsten weisen mithin, verglichen mit den Borsten aus dem Anker- bzw. Schlingenstanzverfahren, nur die halbe Länge auf.

Der Ablauf einer ersten bevorzugten Verfahrensvariante ist wie folgt: Zunächst werden die Borstenbündel vereinzelt, anschliessend werden die Borstenenden verschmolzen und danach werden die Borstenenden direkt umspritzt. Die Borstenbündel können hier generell zusammengeführt, d.h. zu einem grösseren Bündel vereinigt werden. Wenn das Umspritzen auch das Spritzgiessen des Griffs beinhaltet, spricht man vom sogenannten "In Mold Tufting" Verfahren (IMT-Verfahren). Werden zuerst die Borsten mit Plättchen umspritzt und anschliessend die Plättchen mit dem Griff umspritzt, spricht man von einer Integrated Anchorless Production.

Der Ablauf einer zweiten bevorzugten Verfahrensvariante ist wie folgt: Zunächst erfolgt das Spritzgiessen von (separaten) Trägerplättchen für die Borsten mit Durchgangslöchern, anschliessend werden die Borsten bereitgestellt und durch das Trägerplättchen geführt. Danach werden die Borsten an ihrem rückwärtigen Enden angeschmolzen und mit dem Trägerplättchen verschmolzen und schliesslich wird das beborstete Trägerplättchen mit dem ebenfalls separat hergestellten Griff mittels Ultraschall verschweisst. Dabei können Borstenbündel im Prozess zusammengeführt werden oder nicht.

Der Ablauf einer dritten bevorzugten Verfahrensvariante ist wie folgt: Zunächst erfolgt das Spritzgiessen des Grundkörpers mit Durchgangslöchern für Borsten im Kopfbereich, anschliessend werden die Borsten bereitgestellt und durch die Durchgangslöcher im Kopfbereich geführt. Dann werden die Borsten auf der Rückseite des Kopfbereichs verschmolzen und anschliessend wird die Borstenschmelze mit Weichmaterial überspritzt. Bekannte Verfahren umfassen die Möglichkeiten bei welchen das Zusammenführen von Borsten nicht möglich ist sowie Verfahren, bei welchen das Zusammenführen von Borsten möglich ist.

Der Ablauf der vierten Verfahrensvariante ist wie folgt: Zunächst wird ein Grundkörper mit Sacklöchern bzw. Aussparungen für die Borsten im Kopfbereich gespritzt, anschliessend werden die Borsten bündelweise bereitgestellt. Danach werden die Borsten bündelweise verschmolzen, anschliessend wird der Grundkörper im Kopfbereich (d.h. insbesondere der Borstenträger bzw. der Borstenträger) etwa auf Glastemperatur erwärmt und schliesslich werden die verschmolzenen Borstenenden in die Sacklöcher bzw. Aussparungen eingeführt und die Borstenbündel mit Druck in dem Borstenträger verankert. Mit anderen Worten wird hier die Grösse der Sacklöcher reduziert bzw. die Geometrie des Borstenträgers bzw. des Borstenträgers verformt, um so die Borstenbündel zu verankern).

Ein weiteres bevorzugtes Beborstungsverfahren ist das Eindrehverfahren. Hierbei werden zunächst die Borstenfilamente zugeführt, gebündelt und vorgezogen. Insbesondere werden die Borstenfilamente ab einer Rolle zugeführt. Dabei können mehrere Filamentstränge auf einer Rolle aufgewickelt sein. Für die Maschinenbeschickung sind jeweils mehrere Rollen vorgespannt, denn jedes Borstenfilament in der Bürste entspricht einem Filamentstrang. Die Filamente werden passend ausgebreitet, damit sie die Breite aufweisen, in welcher sie in die Bürste eingeführt werden. Anschliessend werden die Filamente so vorgezogen, dass sie für den nächsten Schritt freistehen, d.h. dass der Draht darüber geführt werden kann.

Nunmehr wird der Draht zugeführt, geschnitten und gebogen. Der Draht wird dabei ab einer Drahtrolle zu der Beborstungsmaschine geführt (d.h. abgewickelt) und in den Prozess eingeführt. Der Draht wird auf eine Länge zugeschnitten welche grösser ist als die abgewickelte Länge der eingedrehten Borstenfilamente (die endgültige Ablängung erfolgt nach dem Eindrehen). Der Draht wird dann zu einem U gebogen, damit die offene Seite später über die Filamente geschoben werden kann (man spricht hier auch vom Einfädeln der Borsten).

Nunmehr werden die Filamente und der gebogene Draht zusammengeführt. Der Draht wird dabei von aussen über die Filamente geschoben, wobei der Draht in der Biegung bzw. am Boden des U's gehalten wird. Das offene Drahtende wird dann geklemmt, so dass die Filamente zwischen den Drahtstücken halten. Anschliessend werden die Filamente auf eine Länge geschnitten, welche grösser ist als die Endlänge in der Bürste, damit die Bürste nachdem die Filamente eingedreht sind, korrekt zugeschnitten werden kann.

Hiernach erfolgt das Eindrehen und Profilieren der Filamente. D.h. der Draht wird gedreht, so dass die Filamente zwischen dem Draht eingeklemmt bzw. fixiert sind. Nachdem die Filamente zwischen dem Draht eingeklemmt bzw. fixiert wurden, werden sie auf die gewünschte Länge geschnitten bzw. entsprechend profiliert. Nachdem der entsprechende Bürstenteil fertig gestellt ist, wird schliesslich der überschüssige Draht abgeschnitten.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnungen. Insbesondere werden im Folgenden die erfindungsgemässe Antriebseinheit, das erfindungsgemässe elektrische Zahnbürstenhandteil, das erfindungsgemässe Herstellungsverfahren, die erfindungsgemässen Aufsteckbürsten sowie erfindungsgemässe elektrische Zahnbürsten unter Bezugnahme auf die beigefügten Zeichnungen anhand von Ausführungsbeispielen detaillierter beschrieben. Es zeigen:
- Fig. 1:: eine perspektivische Ansicht einer erfindungsgemässen elektrischen Zahnbürste mit vibrierendem Antrieb von vorne;
- Fig. 2:: eine perspektivische Ansicht der elektrischen Zahnbürste gemäss Fig. 1 von hinten;
- Fig. 3:: eine Seitenansicht der elektrischen Zahnbürste gemäss Fig. 1;
- Fig. 4:: eine Draufsicht auf die Oberseite der elektrischen Zahnbürste gemäss Fig. 1;
- Fig. 5:: eine Draufsicht auf die Rückseite der elektrischen Zahnbürste gemäss Fig. 1;
- Fig. 6:: einen Längsschnitt durch die elektrische Zahnbürste gemäss Fig. 3 in der Seitenansicht;
- Fig. 7:: eine perspektivische Ansicht eines Handteils der elektrischen Zahnbürste gemäss Fig. 1 von vorne;
- Fig. 8:: eine perspektivische Ansicht eines Handteils der elektrischen Zahnbürste gemäss Fig. 1 von hinten;
- Fig. 9:: einen Längsschnitt durch ein Handteil der elektrischen Zahnbürste gemäss Fig. 1 in der Seitenansicht ohne Einschubeinheit;
- Fig. 10:: eine perspektivische Ansicht einer Einschubeinheit für ein Handteil der elektrischen Zahnbürste gemäss Fig. 1 ohne Verkabelung von vorne;
- Fig. 11:: eine perspektivische Ansicht einer Einschubeinheit für ein Handteil der elektrischen Zahnbürste gemäss Fig. 1 ohne Verkabelung von hinten;
- Fig. 12:: eine Seitenansicht einer Einschubeinheit für ein Handteil der elektrischen Zahnbürste gemäss Fig. 1 ohne Verkabelung;
- Fig. 13:: einen Längsschnitt durch eine Einschubeinheit mit schematisch dargestellten Komponenten gemäss Fig. 12 in der Seitenansicht für ein Handteil der elektrischen Zahnbürste gemäss Fig. 1 mit Verkabelung;
- Fig. 14:: eine Detailansicht einer alternativen Ausführungsform der elektrischen Zahnbürste analog zu Fig. 1 mit einem separaten Abschlussteil im Längsschnitt mit Verkabelung;
- Fig. 15:: eine Detailansicht einer weiteren alternativen Ausführungsform der elektrischen Zahnbürste analog zu Fig. 1 mit einem separaten Abschlussteil im Längsschnitt mit Verkabelung;
- Fig. 16:: eine perspektivische Ansicht einer alternativen Variante einer elektrischen Zahnbürste mit oszillierend-rotierendem Antrieb von vorne;
- Fig. 17:: eine perspektivische Ansicht der alternativen elektrischen Zahnbürste gemäss Fig. 16 von hinten;
- Fig. 18:: eine Seitenansicht einer elektrischen Zahnbürste gemäss Fig. 16;
- Fig. 19:: eine Draufsicht auf die Oberseite einer elektrischen Zahnbürste gemäss Fig. 16;
- Fig. 20:: eine Draufsicht auf die Rückseite einer elektrischen Zahnbürste gemäss Fig. 16;
- Fig. 21:: eine seitlich geschnittene Detailansicht des hinteren Endes einer elektrischen Zahnbürste gemäss Fig. 18 mit Verkabelung;
- Fig. 22:: eine perspektivische Ansicht einer Einschubeinheit für eine elektrische Zahnbürste gemäss Fig. 16 von vorne;
- Fig. 23:: eine perspektivische Ansicht einer Einschubeinheit für eine elektrische Zahnbürste gemäss der Fig. 16 von hinten;
- Fig. 24:: einer Seitenansicht einer Einschubeinheit für eine elektrische Zahnbürste gemäss Fig. 16;
- Fig. 25:: eine Detailansicht des hinteren Endes einer Einschubeinheit für eine elektrische Zahnbürste gemäss Fig. 16.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts", "vorne", "hinten" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Figuren dargestellt verwendet. Diese räumlichen Relativangaben umfassen auch andere Positionen und Ausrichtungen als die in den Figuren dargestellten. Zum Beispiel, wenn ein in den Figuren dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Figuren und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Figur lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Figuren stehen für ähnliche oder gleiche Elemente.

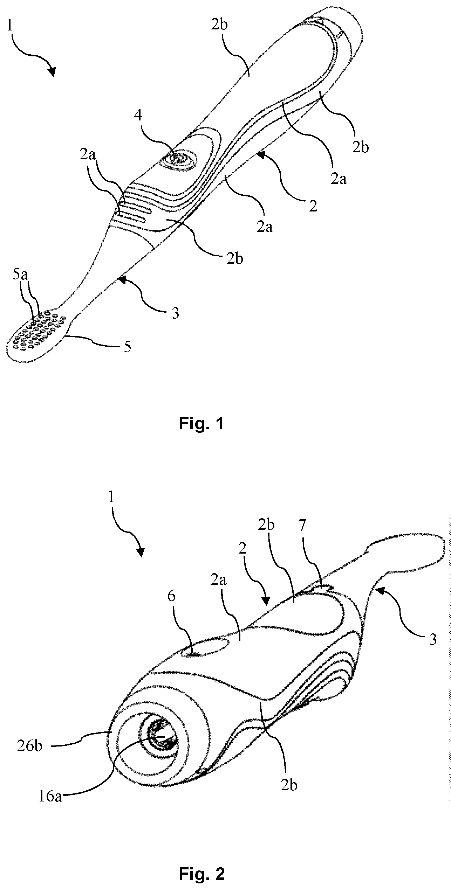

In den Fig. 1 bis 15 wird generell eine elektrische Zahnbürste 1 in Übereinstimmung mit der vorliegenden Erfindung mit einer alternativen Ausgestaltungsvariante (vibrierender Antrieb) veranschaulicht.

In den Fig. 1-5 wird dabei die elektrische Zahnbürste 1 von den verschiedenen Seiten gezeigt. Die elektrische Zahnbürste umfasst ein Handteil 2, welches ein Gehäuse aus Hartkomponente 2a aufweist, welches in manchen Bereichen mit Weichkomponente 2b versehen ist, um etwa die Griffigkeit zu erhöhen. Auf der Oberseite weist die Zahnbürste 1 einen Ein-/Aus-Schalter 4 auf, welcher ebenfalls mit Weichkomponente 2b überspritzt ist. Am vorderen Ende des Handteils 2 ist eine Aufsteckbürste 3 aufgebracht, welche in Fig. 1 und Fig. 2 keine Borsten aufweist, so dass am Borstenträger 5 bzw. Bürstenkopf nur die Borstenlöcher 5a zu sehen sind, welche vorliegend als Sacklöcher ausgeführt sind.

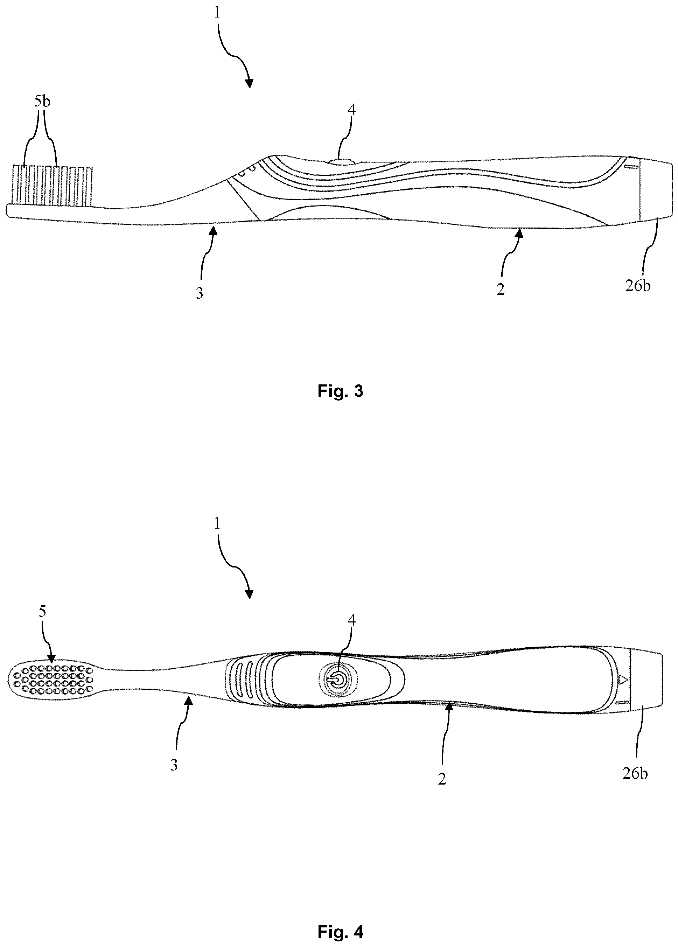

In den Fig. 3 und 4 weist die Aufsteckbürste Borsten 5b auf, welche in dieser Ausführungsform dieselbe Länge aufweisen. Am hinteren Ende des Handteils 2 verschliesst das Abschlussteil 26b das Gehäuse des Handteils 2 und umgibt als eine Art Schutzstruktur die Ladebuchse 16.

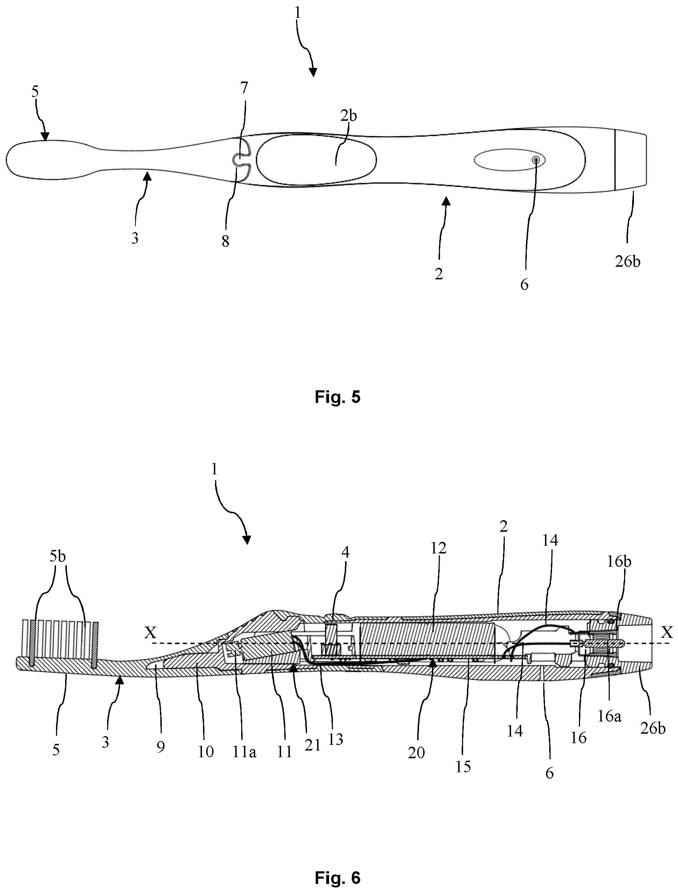

Wie in Fig. 5 zu sehen, weist die Aufsteckbürste 3 auf der Rückseite eine Ausnehmung 8 auf, in welcher ein korrespondierender Nocken 7 des Handteils 2 eingreift, wodurch eine vordefinierte Abzugskraft der Aufsteckbürste 3 eingestellt werden kann. Auf der Rückseite weist das Handteil 2 gegenüberliegend von dem Ein-/Aus-Schalter 4 eine Fläche mit Weichkomponente 2b auf, welche wiederum für einen besseren Halt sorgt. Des Weiteren ist im hinteren Endbereich auf der Rückseite des Handteils 2 ein Durchgangsloch mit Druckausgleichselement 6 zum Entgasen des Gehäuseinnenraums 19 vorgesehen.

Gemäss der Schnittansicht in Fig. 6 erkennt man zunächst die in den Sacklöchern (Borstenlöchern 5a) des Borstenträgers 5 angeordneten Borsten 5b. Des Weiteren erkennt man die in das Handteil 2 eingebrachte Einschubeinheit 20, welche den Einschubträger 21 umfasst, an welchem der Motor 11 mit dem Exzenter 11a, der Ein-/Aus-Schalter 4, der Akku 12, die Printplatte 15 und die Ladebuchse 16 mit dem Ladebuchsengehäuse 16b sowie dem Ladebuchsenstift 16a angeordnet sind. Die Ladebuchse 16 bzw. das Ladebuchsengehäuse 16b und der Ladebuchsenstift 16a ist über die elektrischen Leitungen 14 mit der Printplatte 15 verbunden, welche wiederum mit dem Akku 12 verbunden ist. Der Motor 11 ist über die elektrischen Leitungen 13 mit der Printplatte 15 verbunden und der Ein-/Aus-Schalter 4 ist auf der Printplatte 15 derart angeordnet, dass er den Stromkreis schliessen oder unterbrechen kann. Die Einschubeinheit 20 ist somit derart konfiguriert ist, dass mit ihr alleine ein geschlossener Stromkreis herstellbar ist. Den hinteren Abschluss des Handteils 2 bildet das Abschlussteil 26b. Das Handteil 2 ist vorne mit seiner steckerartigen Kopplungsstruktur 10 in die korrespondierende, buchsenartige Kopplungsstruktur 9 der Aufsteckbürste 3 eingebracht.

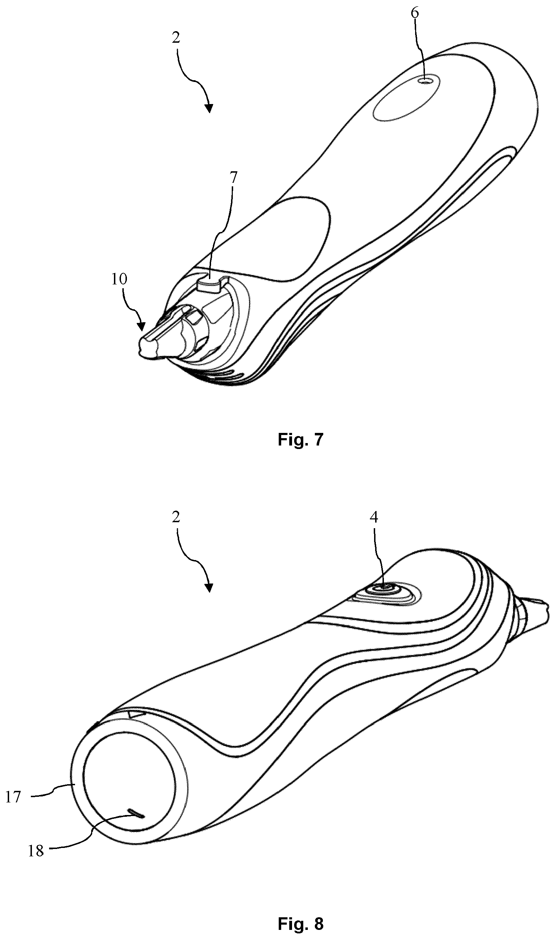

Die Fig. 7 bis 9 illustrieren das Handteil 2 bzw. dessen Gehäuse, d.h. ohne Aufsteckbürste und ohne Einschubeinheit 20. Fig. 7 zeigt dabei insbesondere das Durchgangsloch mit Druckausgleichselement 6 im hinteren Bereich des Handteils 2 sowie den Nocken 7 und die steckerartige Kupplungsstruktur 10, welche die Schnittstelle zur Aufsteckbürste 3 bildet.

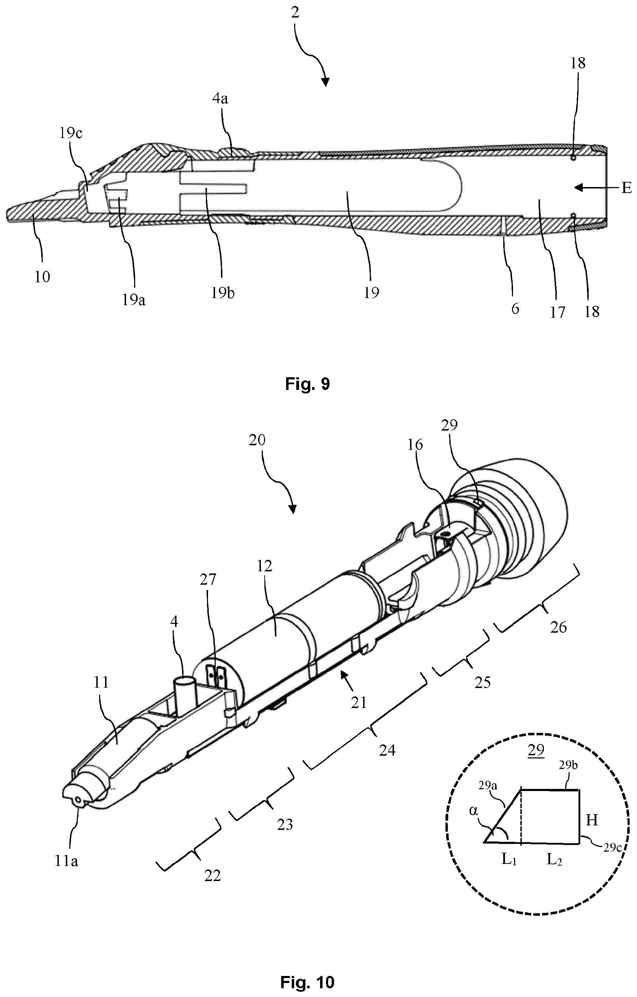

In Fig. 8 wird insbesondere der mit Weichkomponente überspritze Ein-/AusSchalter 4 gezeigt sowie die Gehäusewand 17 mit einer Rastausnehmung 18 für eine entsprechende Rastnase 29 der Einschubeinheit 20, welche weiter unten beschrieben wird. In der Regel sind zumindest zwei vorliegend vier Rastausnehmungen 18 im hinteren Gehäusebereich vorgesehen, wie in Fig. 9 gezeigt, welche einander gegenüberliegend an der Gehäusewand 17 in Richtung Oberseite bzw. Rückseite angeordnet sind. Im Gehäuseinnenraum 19 sind in dieser Ausführungsform Positionierhilfen 19a bzw. 19b für die Einschubeinheit 20 bzw. den Einschubträger 21 vorgesehen sowie darüber hinaus der Anschlag 19c für den Motor 11. Die Einführrichtung für die Einschubeinheit 20 ist mit dem Pfeil E angegeben.

In Fig. 10 wird eine erfindungsgemässe Einschubeinheit 20 für sich alleine genommen dargestellt. Die Einschubeinheit 20 umfasst den Einschubträger 21, welcher sich in mehrere Abschnitte für die einzelnen Bauteile untergliedert. Vorne ist der Motorträger 22 für den Motor 11 vorgesehen. An diesen schliesst sich der Schalterträger 23 an, welcher den Ein-/Aus-Schalter 4 umgibt (der Schalter selbst ist auf der Printplatte angeordnet). Hiernach folgt der Akkuträger 24 in welchen der Akku 12 eingebracht ist, welcher über angelötete Kontaktbleche 27 (vorliegend ist nur das vordere Kontaktblech sichtbar) in elektrischem Kontakt mit der Printplatte 15 steht. Im Anschluss daran befindet sich der Verbindungsträger 25, durch welchen im finalen Gerät die elektrischen Leitungen 14 von der Printplatte 15 zur Ladebuchse 16 geführt sind. Die Ladebuchse 16 ist im Ladevorrichtungsträger 26 aufgenommen. Am Ladebuchsenträger 26 befinden sich auch die Rastnasen 29, welche in die vorbeschriebenen Ausnehmungen 18 in der Gehäusewand 17 des Handteils 2 einrasten.

In der Detailansicht gemäss Fig. 10 wird eine Rastnase 29 bzw. deren (entgegen der Einführrichtung E) keilförmiger Aufbau in eine Seitenansicht veranschaulicht. Die Rastnase 29 umfasst eine Einführschräge 29a welche sich in einem Winkel α von der Grundlinie der Rastnase 29 erstreckt, welche eine Länge L₁ aufweist. An die Einführschräge 29a schliesst sich der horizontale Teil 29b an, welcher eine Grundlinie mit einer Länge L₂ aufweist sowie eine senkrechte Wand 29c mit einer Höhe H, welche der maximalen Höhe der Einführschräge 29a entspricht.

Der von der Einführschräge 29a gegenüber der Grundlinie definierte Winkel α liegt in einem Bereich von 10° bis 75° vorzugsweise von 15° bis 35°.

Die Länge L₁ der Grundlinie der Einführschräge 29a beträgt von 0.3 mm bis 3 mm vorzugsweise von 0.5 mm bis 1.5 mm.

Die Höhe H der Einführschräge 29a beträgt von 0.1 mm bis 1.5 mm vorzugsweise von 0.25 mm bis 0.5 mm. Die Höhe H nimmt dabei stetig zu und geht dann in den horizontalen Teil 29b über.

Der horizontale Teil 29b umfasst die Grundlinie mit der Länge L₂ von 0.1 mm bis 1 mm vorzugsweise von 0.15 mm bis 2 mm. Die Höhe H beträgt zwischen 0.1 mm bis 1.5 mm vorzugsweise von 0.25 mm bis 0.5 mm (d.h. entsprechend dem höchsten Punkt der Einführschräge 29a).

Die hintere, senkrechte Wand 29c dient dem eigentlichen Einrasten in die Rastausnehmungen 18 im Gehäuse und weist entsprechend auch die Höhe H auf.

Die Gesamtabmessung der Einführschräge 29a beträgt demnach in der Länge von L₁ plus L₂ von 0.4 mm bis 4 mm vorzugsweise von 0.65 mm bis 3.5 mm, in der Breite (d.h. senkrecht zur Längsachse X bzw. zur Einführrichtung E) von 0.5 mm bis 3 mm vorzugsweise von 0.8 mm bis 2 mm und in der Höhe von 0.1 mm bis 1.5 mm vorzugsweise von 0.25 mm bis 0.5 mm.

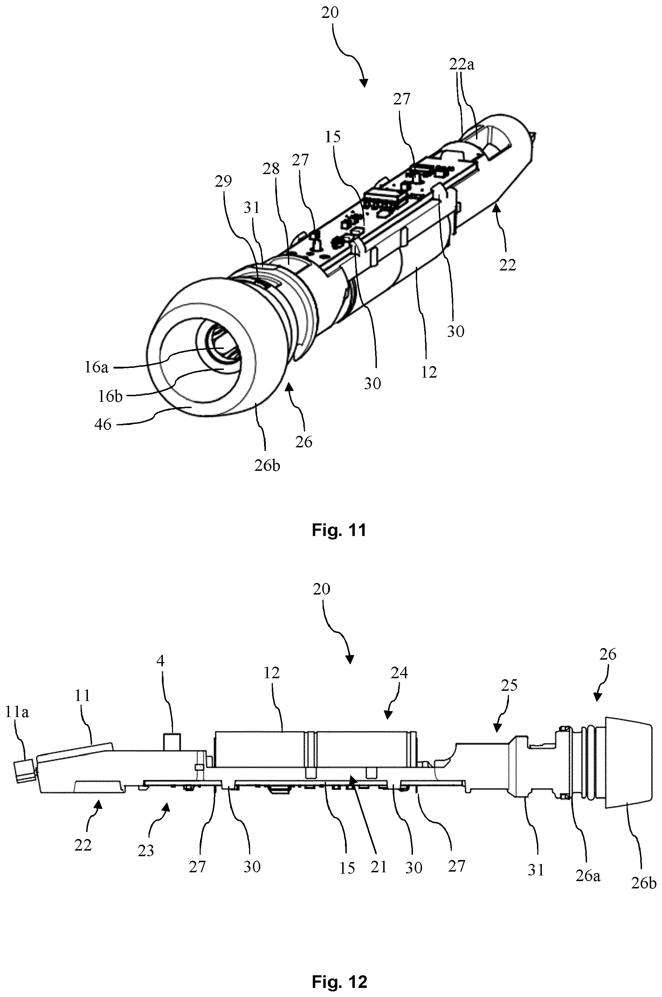

In der perspektivischen Rückansicht gemäss Fig. 11 erkennt man den Ladevorrichtungsträger 26, welcher die Ladebuchse 16 mit dem Ladebuchsenstift 16a und dem Ladebuchsengehäuse 16b aufnimmt. Das Abschlussteil 26b des Ladevorrichtungsträgers 26 umgibt die Ladebuchse 16 bzw. deren vorderes Ende in der Art eines ringförmigen Schutzelements, welches gleichzeitig für ein senkrechtes Aufstellen des Geräts konfiguriert ist, indem es eine flache Aussenfläche 46 aufweist. Weiterhin erkennt man die senkrechte Wand 29c der Rastnase 29 sowie eine Abflachung 31 am Ladevorrichtungsträger 26 sowie eine Durchgangsöffnung 28 im Bereich des Verbindungsträgers 25. Durch entsprechende Öffnungen in der Printplatte 15 hindurch ragen die Kontaktenden der Kontaktbleche 27, welche an die Printplatte 15 angelötet werden und für die Verbindung des Akkus 12 mit der Printplatte 15 sorgen. Die Printplatte 15 wird von Halterungen 30 des Einschubträgers gehalten. Der Motorträger 22 weist an seiner Rückseite zwei benachbarte Durchgangsöffnungen 22a mit einer dazwischen angeordneten Trennwand auf.

Die Seitenansicht der Einschubeinheit gemäss Fig. 12 veranschaulicht im Wesentlichen nochmals die im Zusammenhang mit Fig. 10 beschriebenen Bauteile bzw. Komponenten der erfindungsgemässen Einschubeinheit 20.

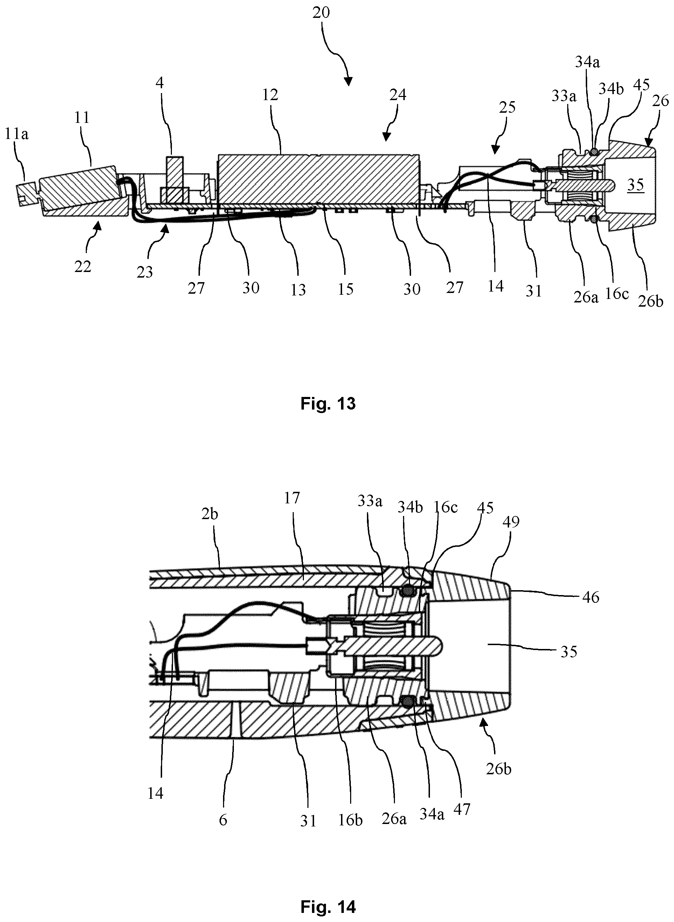

**In** Fig. 13 wird eine Schnittansicht durch die bestückte Einschubeinheit 20 gemäss Fig. 12 mit schematisch dargestellten Komponenten wiedergegeben. **In** dieser Ansicht erkennt man insbesondere den einteiligen Aufbau des Ladevorrichtungsträgers 26 gemäss dieser Ausführungsform, d.h. der Ladevorrichtungsträgerkörper 26a und das Abschlussteil 26b gehen ohne Unterbrechung bzw. Kopplung ineinander über. Der Ladevorrichtungsträgerkörper 26a umschliesst dabei die Ladebuchse 16 bzw. das Ladebuchsengehäuse 16b, welches den Ladebuchsenstift 16a umgibt. Auf den Ladebuchsenstift 16a kann ein korrespondierender Stecker eines Netzteils zum Laden des Geräts aufgesteckt werden. Das Abschlussteil 26b umgibt Ladebuchse 16 bzw. dessen vorderes Ende in der Art eines ringförmigen Schutzelements, welches gleichzeitig für ein senkrechtes Aufstellen des Geräts konfiguriert ist, indem es eine flache Aussenfläche 46 aufweist (vgl. Fig. 11).

An das Ladebuchsengehäuse 16b ist die eine elektrische Leitung 14 angeschlossen und die andere elektrische Leitung 14 ist an den Ladebuchsenstift 16a angeschlossen. Die elektrischen Leitungen 14 werden von der Printplatte 15 durch den Verbindungsträger 25 hindurch zum Ladebuchsengehäuse 16b bzw. zum Ladebuchsenstecker 16a geführt. Das Ladebuchsengehäuse 16b umfasst weiterhin hakenförmige Rastgeometrien 16c mittels derer die Ladebuchse 16 im Ladevorrichtungsträgerkörper 26a gehalten wird. Beim Einbringen der Ladebuchse 16 in den Ladevorrichtungsträgerkörper 26a wird die Ladebuchse 16 mit diesem verpresst, wodurch eine Abdichtung nach aussen hin erzielt werden kann. Das Abschlussteil 26b umfasst einen umlaufenden Vorsprung 45 an seinem dem Ladevorrichtungsträgerkörper 26a zugewandten Ende, welcher zusammen mit einem angrenzenden Weichkomponentenbereich 2b des Gehäuses dichtend zusammenwirken kann. Der Ladevorrichtungsträgerkörper 26a weist an seinem äusseren Umfang weiterhin zwei umlaufende Nuten 33a und 34a auf, welche jeweils zur Aufnahme eines korrespondierenden Dichtungselements bzw. O-Rings dienen. In der vorliegenden Ausführungsform ist nur die zum Abschlussteil 26b hin gelegene Nut 34a mit einem O-Ring 34b belegt. Diese Form der Abdichtung zwischen Gehäuse und Ladevorrichtungsträger ist in der Regel ausreichend. Sicherheitshalber kann allerdings auch die Nut 33a mit einem zusätzlichen Dichtungselement bzw. O-Ring 33b belegt sein. Denkbar ist es auch, dass lediglich die Nut 33a mit einem Dichtungselement bzw. O-Ring 33b belegt ist. Die Printplatte 15 wird von den Halterungen 30 des Einschubträgers 21 in Position gehalten. Die elektrischen Leitungen 13 werden von der Printplatte 15 unter dem Schalterträger 23 her in den Motorträger 22 geleitet und dort jeweils vorzugsweise an einen Anschluss an der Rückseite des Motors 11 angeschlossen.

In Fig. 14 wird eine Ausführungsform der erfindungsgemässen Einschubeinheit 20 gezeigt, in welcher der Ladevorrichtungsträger 26 einen zweiteiligen Aufbau besitzt. Dabei ist das Abschlussteil 26b mit Rasteinrichtungen 47 am Ladevorrichtungsträgerkörper 26a verrastet und kann so zusammen mit diesem bzw. als Teil der Einschubeinheit 20 in das Handteil 2 eingeschoben werden. Dabei wird, im eingeschobenen Zustand, zwischen dem Vorsprung 45 und der angrenzenden Weichkomponente 2b am hinteren Ende des Handteils eine weitere Abdichtung geschaffen, d.h. zusätzlich zu der umfänglichen Abdichtung zwischen dem Dichtungselement bzw. O-Ring 34b und der Innenseite der Gehäusewand 17.

Die Ladebuchse 16 ist von aussen her frei zugänglich durch die Ladeöffnung 35. In der Gehäusewand 17 in Richtung Rückseite ist das Durchgangsloch mit Druckausgleichselement eingebracht. Die Abflachung 31 stützt den Verbindungsträger 25 gegenüber der Innenseite der Gehäusewand 17 ab. Der Ladevorrichtungsträgerkörper 26a stützt sich umfänglich an der Innenseite der Gehäusewand 17 ab. Das Abschlussteil 26b schliesst das Handteil 2 nach aussen hin ab und bildet so einen Teil der äusseren Oberfläche des Handteils und zwar insbesondere in horizontaler Richtung mit seinem äusseren Umfang 49 aber auch in vertikaler Richtung mittels der flachen Aussenfläche 46. Ebenfalls einen Teil der äusseren Oberfläche in vertikaler bildet die Ladebuchse 16 mit dem äusseren Teil des Ladebuchsengehäuses 16b sowie dem hinteren Ende des Ladebuchsenstifts 16a.

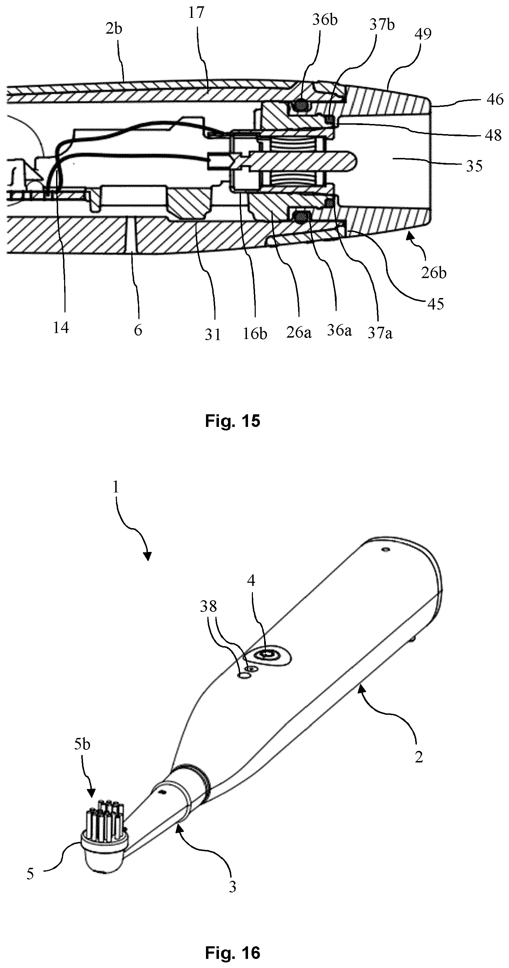

In Fig. 15 wird eine weitere Ausführungsform der erfindungsgemässen Einschubeinheit 20 gezeigt, in welcher der Ladevorrichtungsträger einen zweiteiligen Aufbau besitzt. Hier ist das Abschlussteil 26b seitlich auf den Ladevorrichtungsträgerkörper 26a aufgesteckt, wobei vorzugsweise eine Klemmwirkung erzielt wird und wobei das Abschlussteil 26b als Teil der Einschubeinheit 20 mit dieser in das Handteil eingeschoben wird. Auch hier wird, im eingeschobenen Zustand, zwischen dem Vorsprung 45 und der angrenzenden Weichkomponente 2b am hinteren Ende des Handteils 2 eine Abdichtung geschaffen, d.h. zusätzlich zu den Abdichtungen zwischen dem Abschlussteil 26b und der Innenseite der Gehäusewand 17 sowie zwischen Abschlussteil 26b und dem Ladevorrichtungsträgerkörper 26a in axialer Richtung. Die umfängliche Abdichtung zwischen dem Abschlussteil 26b und der Innenseite der Gehäusewand 17 wird mittels des Dichtungselements 36b bzw. O-Rings in der Nut 36a am vorderen Ende des Abschlussteils erzielt. Die axiale Abdichtung zwischen dem Abschlussteil 26b und dem Ladevorrichtungsträgerkörper 26a wird mittels des Dichtungselements 37b bzw. O-Rings in der Nut 37a am hinteren Ende des Ladevorrichtungsträgerkörpers 26a erzielt, wobei das Abschlussteil 26b mit einem Haltevorsprung 48 gegen den O-Ring 37b drückt.

Auch in diesem Fall kann das Abschlussteil zusammen mit dem Ladevorrichtungsträgerkörper bzw. der restlichen Einschubeinheit 20 in das Gerät eingeschoben werden. Die Ladebuchse 16 ist von aussen her frei zugänglich durch die Ladeöffnung 35. In der Gehäusewand 17 in Richtung Rückseite ist das Durchgangsloch mit Druckausgleichselement 6 eingebracht. Die Abflachung 31 stützt den Verbindungsträger 25 gegenüber der Innenseite der Gehäusewand 17 ab. Der Ladevorrichtungsträgerkörper 26a stützt sich wiederum umfänglich an der Innenseite der Gehäusewand 17 ab. Das Abschlussteil 26b schliesst auch hier das Handteil 2 nach aussen hin ab und bildet so einen Teil der äusseren Oberfläche des Handteils 2 und zwar insbesondere in horizontaler Richtung mit seinem äusseren Umfang 49 aber auch in vertikaler Richtung mittels der flachen Aussenfläche 46. Ebenfalls einen Teil der äusseren Oberfläche in vertikaler Richtung bildet die Ladebuchse 16 mit dem äusseren Teil des Ladebuchsengehäuses 16b sowie etwa dem hinteren Ende des Ladebuchsenstifts 16a.

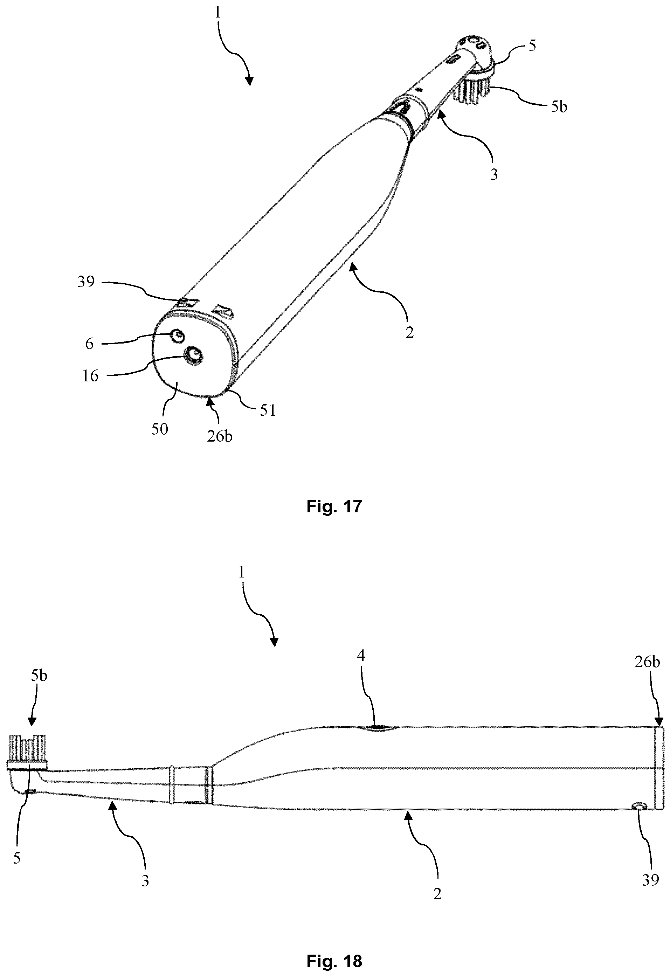

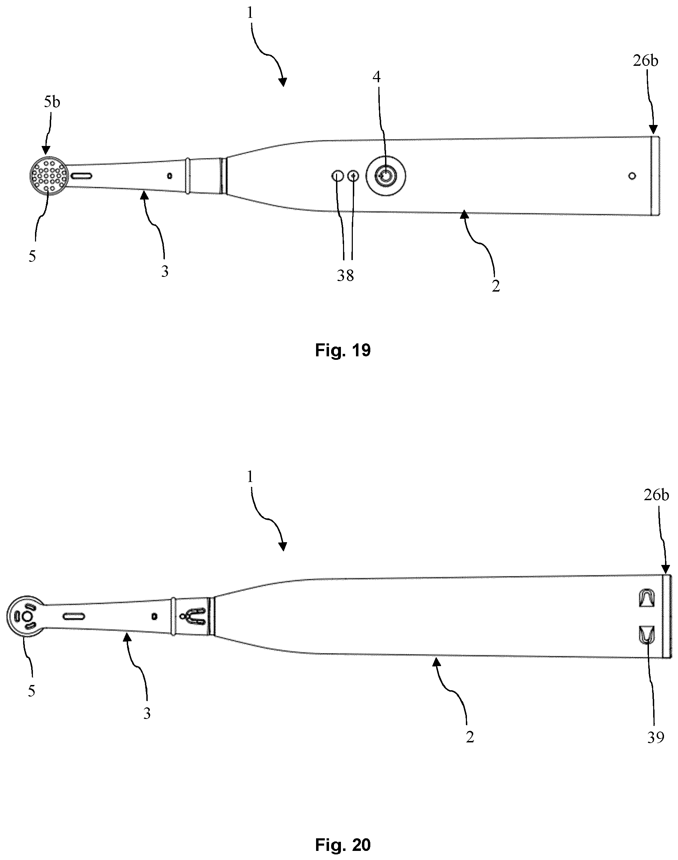

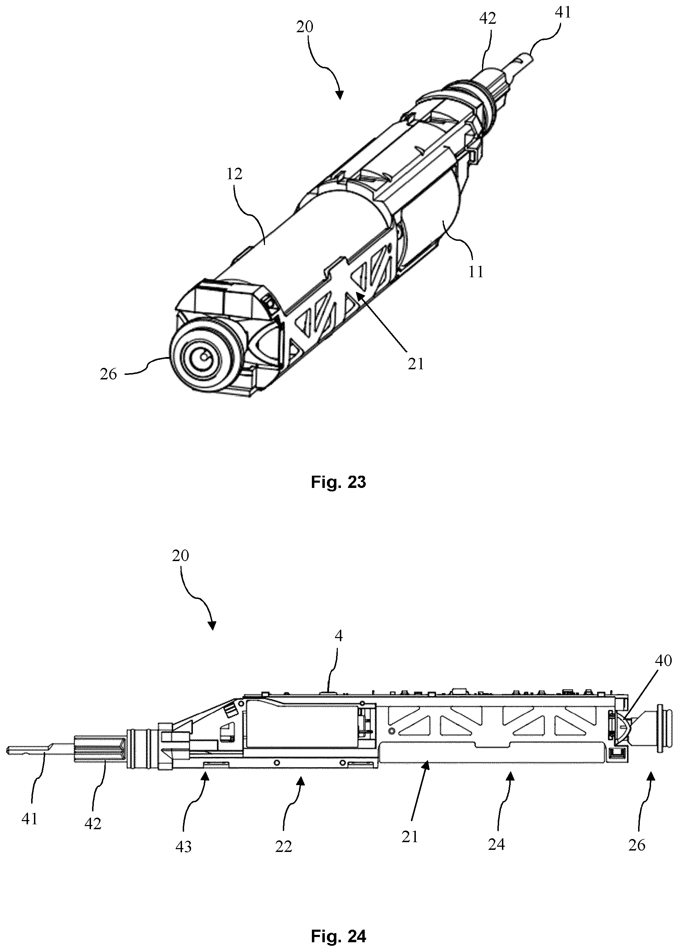

In den Fig. 16 bis 25 wird nunmehr eine Ausführungsform einer elektrischen Zahnbürste 1 mit einem oszillierend-rotierenden Antrieb gezeigt, in welche eine alternative Einschubeinheit 20 einbringbar ist.

In den Fig. 16 bis 20 wird die elektrische Zahnbürste 1 von verschiedenen Seiten dargestellt. Die elektrische Zahnbürste 1 umfasst ein Handteil 2, welches ein Gehäuse aus Hartkomponente 2a aufweist. Auf der Oberseite weist die Zahnbürste 1 einen Ein-/Aus-Schalter 4 auf. Oberhalb des Ein-/Aus-Schalters 4 sind in dem Gehäuse Signalelemente 38, wie etwa LED Leuchten angeordnet, welche ggf. den Betriebs- und/oder Ladezustand des Geräts anzeigen. An das Handteil 2 schliesst sich eine Aufsteckbürste 3 mit einem runden Borstenträger 5 bzw. Bürstenkopf an, auf welchem die Borsten 5b angeordnet sind. Am hinteren Ende des Handteils 2 ist ein Abschlussteil 26b angeordnet, welches eine Öffnung für die Ladebuchse 16 aufweist und welches das Handteil 2 nach aussen hin abschliesst und so einen Teil der äusseren Oberfläche des Handteils bildet und zwar insbesondere in Längsrichtung mit seiner flachen Aussenfläche 50 sowie aber auch senkrecht zur Längsrichtung mit seinem äusseren Umfang 51. Im Abschlussteil 26b, zur flachen Aussenfläche 50 hin, ist in dieser Ausführungsform auch das Durchgangsloch mit Druckausgleichselement 6 angeordnet. Auf der Rückseite des Handteils 2 erkennt man zudem Ablagestrukturen 39 für ein sicheres Ablegen des Handteils 2 auf der Rückseite, d.h. mit den Borsten 5b nach oben.

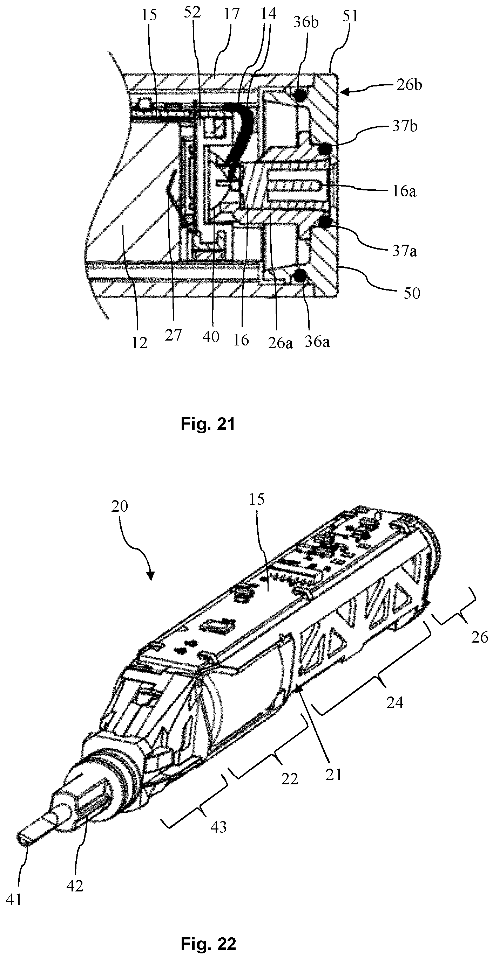

Fig. 21 zeigt eine Querschnittsansicht des hinteren Endes des Handteils einer elektrischen Zahnbürste mit eingebrachter Einschubeinheit gemäss den Fig. 16 bis 20. Das Abschlussteil 26b liegt hier bündig am hinteren Ende der Gehäusewand 17, wobei die flachen Aussenfläche 50 in Längsrichtung einen Teil der äusseren Oberfläche des Handteils 2 bildet und wobei der äussere Umfang 51 in senkrecht zur Längsrichtung einen Teil der äusseren Oberfläche des Handteils bildet. Zur seitlichen Abdichtung gegenüber der Gehäusewand 17 weist das Abschlussteil 26b ein Dichtungselement bzw. einen O-Ring 36b auf, welcher in eine korrespondierende Nut 36a eingelegt ist. Zur axialen Abdichtung des Ladevorrichtungsträgerkörpers 26a gegenüber dem Abschlussteil 26b weist der Ladevorrichtungsträgerkörper 26a eine Nut 37a auf, in welche ein Dichtungselement 37b bzw. ein O-Ring eingelegt ist, auf welches das Abschlussteil 26a in axialer Richtung mit seiner Innenseite drückt.

Das Abschlussteil 26b verrastet hier mit dem Gehäuse und wird nicht mit der Einschubeinheit 20 in das Handteil eingeschoben, sondern wird getrennt davon auf das hintere Ende des Handteils aufgebracht, wobei das Abschlussteil 26b bevorzugt an der Gehäusewand 17 verrastet. Mit anderen Worten ist das Abschlussteil 26b als solches in dieser Ausführungsform nicht Teil der Einschubeinheit 20 bzw. des Ladevorrichtungsträgers 26b. Der Ladevorrichtungsträgerkörper 26a ist hier mittels eines Federlagers 40 federnd gelagert an einer Stützstruktur 52 der Einschubeinheit 20, welche an den Akku 12 bzw. den Akkuträger 24 angrenzt. Die elektrischen Leitungen 14 sind von der Printplatte 15 her kommend an die Kontakte der Ladebuchse 16 angeschlossen.

In den Fig. 22 bis 24 wird die Einschubeinheit 20 für die elektrische Zahnbürste gemäss den Fig. 16 bis 21 in perspektivischer Ansicht von vorne und hinten sowie in der Seitenansicht veranschaulicht. In dieser Ausführungsform der Einschubeinheit 20 ist die Printplatte 15 auf der Oberseite des Einschubträgers 21 angeordnet, wobei der Einschubträger 20 hier in der Art eines Monoframe aufgebaut ist, welcher einen Getriebeträger 43 (für das Getriebe, welches die rotierend-oszillierende Bewegung erzeugt), einen Motorträger bzw. eine Motorzone 22, einen Akkuträger bzw. eine Akkuzone 24 sowie einen Ladevorrichtungsträger 26 bzw. eine Ladevorrichtungsträgerzone aufweist. Am vorderen Ende der Einschubeinheit 20 ist das Schlüsselelement 42 (als Schnittstelle zur Aufsteckbürste 3) angeordnet, welches die Antriebswelle 41 umschliesst. Abdichtungen erfolgen in diesem vorderen Bereich zwischen Antriebswelle 41 und Schlüsselelement 42 einerseits sowie zwischen Schlüsselelement 42 und dem Gehäuse andererseits (jeweils nicht gezeigt). Auch gemäss dieser Ausführungsform ist die Einschubeinheit 20 derart konfiguriert ist, dass mit ihr alleine ein geschlossener Stromkreis herstellbar ist.

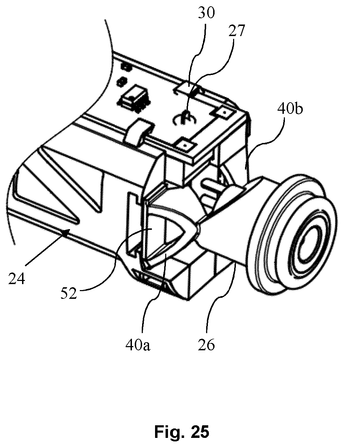

In Fig. 25 wird schliesslich eine Detailansicht vom hinteren Ende der Einschubeinheit 20 gemäss den Fig. 22 bis 24 illustriert. Man erkennt, dass die Ladevorrichtungsträger 26 über einen ersten Federbügel 40a des Federlagers 40 sowie über einen zweiten Federbügel 40b des Federlagers 40 federnd an der Stützstruktur 52 der Einschubeinheit 20 gelagert ist. Die Federbügel 40a und 40b sind dabei unabhängig voneinander zwischen der Stützstruktur 52 und dem Ladevorrichtungsträger 26 angeordnet. Auf diese Weise kann eine besonders effektive Längenausgleichsfunktion bereitgestellt werden (das Abschlussteil 26b drückt bei dieser Ausführungsform nämlich die Einschubeinheit 20 in das Gehäuse hinein). Darüber hinaus erkennt man noch die Halterungen 30 am Akkuträger 24, welche in Eingriff mit der Oberseite der Printplatte 15 sind. Ausserdem ragt ein Kontaktblech 27 mit einem Kontaktende durch die Printplatte 15 hindurch.

### Liste der Bezugszeichen:

- 1: Elektrisches Körperpflegegerät bzw. elektrische Zahnbürste
- 2: Handteil
- 2a: Hartkomponente (Gehäuse)
- 2b: Weichkomponente
- 3: Aufsteckbürste
- 4: Ein-/Aus-Schalter
- 5: Borstenträger
- 5a: Borstenlöcher
- 5b: Borsten
- 6: Durchgangsloch mit Druckausgleichselement
- 7: Nocken (Handteil)
- 8: Ausnehmung (Aufsteckbürste)
- 9: Buchsenartige Kupplungsstruktur (Aufsteckbürste)
- 10: Steckerartige Kupplungsstruktur (Handteil)
- 11: Antriebseinheit bzw. Motor
- 11a: Exzenter
- 12: Energiequelle bzw. Akku
- 13: Elektrische Leitungen (zum Motor)
- 14: Elektrische Leitungen (zur Ladebuchse)
- 15: Printplatte
- 16: Ladevorrichtung bzw. Ladebuchse
- 16a: Ladebuchsenstift
- 16b: Ladebuchsengehäuse (Metall)
- 16c: Rastgeometrie (hakenförmig)
- 17: Gehäusewand (Handteil)
- 18: Rastausnehmungen in Gehäusewand (offen oder Sackloch)
- 19: Gehäuseinnenraum
- 19a: Positionierhilfen
- 19b: Positionierhilfen
- 19c: Anschlag für den Motor
- 20: Einschubeinheit
- 21: Einschubträger
- 22: Motorträger
- 22a: Durchgangsöffnungen
- 23: Schalterträger
- 24: Akkuträger
- 25: Verbindungsträger
- 26: Ladevorrichtungsträger (Ladebuchsenträger)
- 26a: Ladevorrichtungsträgerkörper
- 26b: Abschlussteil
- 27: Kontaktbleche
- 28: Durchgangsöffnung
- 29: Rastnasen (Ladevorrichtungsträger)
- 29a: Einführschräge
- 29b: Horizontaler Teil
- 29c: Senkrechte Wand
- 30: Halterungen für Printplatte
- 31: Abflachung
- 33a: erste Nut
- 33b: erstes Dichtungselement (O-Ring)
- 34a: zweite Nut
- 34b: zweites Dichtungselement (O-Ring)
- 35: Ladeöffnung
- 36a: Nut
- 36b: Dichtungselement (O-Ring)
- 37a: Nut
- 37b: Dichtungselement (O-Ring)
- 38: Signalelemente
- 39: Ablagestrukturen
- 40: Federlager (für Ladebuchse)
- 40a: Federbügel
- 40b: Federbügel
- 41: Antriebswelle
- 42: Schlüsselelement
- 43: Getriebeträger
- 45: umlaufender Vorsprung Abschlussteil
- 46: flache Aussenfläche Abschlussteil
- 47: Rasteinrichtungen Abschlussteil
- 48: Haltevorsprung Abschlussteil
- 49: äusserer Umfang Abschlussteil
- 50: flache Aussenfläche
- 51: äusserer Umfang Abschlussteil
- 52: Stützstruktur
- E: Pfeil Einführrichtung Einschubeinheit
- X: Längsachse (Handteil)
- L₁: Länge Schräge (Rastnase)
- L₂: Länge horizontaler Teil (Rastnase)
- H: Höhe (Rastnase)
- α: Winkel (Schräge)

## Patentansprüche

1. Einschubeinheit (20) für ein Handteil (2) eines elektrischen Körperpflegegeräts, insbesondere einer elektrischen Zahnbürste (1), aufweisend einen Einschubträger (21) an welchem eine Antriebseinheit (11), ein Ein-/AusSchalter (4), eine Energiequelle (12), eine Printplatte (15) sowie eine Ladevorrichtung (16) angeordnet sind, wobei
die Einschubeinheit (20) derart konfiguriert ist, dass ein geschlossener Stromkreis über physische elektrische Leitungen/Kabel (13, 14) und/oder geeignete Steckkontaktelemente zwischen den am Einschubträger (21) angeordneten Bauteilen (4, 11, 12, 15, 16) hergestellt wird, ohne dass die Einschubeinheit (20) in das entsprechende Gerät eingeführt werden muss, wobei
der Einschubträger (21) im Bereich der Ladevorrichtung (16) einen Ladevorrichtungsträger (26) umfasst und wobei der Ladevorrichtungsträger und/oder die Ladevorrichtung im montierten Zustand einen Teil der äusseren Oberfläche des Handteils (2) bilden, wobei
der Ladevorrichtungsträger (26) einen Ladevorrichtungsträgerkörper (26a) und ein Abschlussteil (26b) umfasst, **dadurch gekennzeichnet, dass** die Ladevorrichtung (16) eine oder mehrere Rastgeometrien aufweist, welche konfiguriert sind im montierten Zustand eine Abdichtung der Ladevorrichtung (16) gegenüber dem Ladevorrichtungsträgerkörper (26a) durch Verpressung zu bewirken, wobei ein Formschluss passiert, welcher die Abdichtung der Ladevorrichtung gegenüber dem Ladevorrichtungsträgerkörper bewirkt.

2. Einschubeinheit (20) nach Anspruch 1, wobei die Ladevorrichtung (16) eine Einsteckvorrichtung, insbesondere eine Ladebuchse für ein Netzteil mit korrespondierendem Stecker, umfasst.

3. Einschubeinheit (20) nach Anspruch 1 oder 2, wobei die Ladevorrichtung (16) eine induktive Vorrichtung, insbesondere eine Ladespule zum Einbringen eines korrespondierenden Ferritkerns, umfasst.

4. Einschubeinheit (20) nach Anspruch 1, wobei der Ladevorrichtungsträger (26) einteilig ausgebildet ist.

5. Einschubeinheit (20) nach Anspruch 1, wobei der Ladevorrichtungsträger (26) mehrteilig ausgebildet ist.

6. Einschubeinheit (20) nach Anspruch 5, wobei bei einer mehrteiligen Ausbildung des Ladevorrichtungsträgers (26) dieser ein separates Abschlussteil (26b) umfasst, welches mit dem Ladevorrichtungsträgerkörper (26a) verrastbar ist.

7. Einschubeinheit (20) nach Anspruch 5, wobei bei einer mehrteiligen Ausbildung des Ladevorrichtungsträgers (26) dieser ein separates Abschlussteil (26b) umfasst, welches auf den Ladevorrichtungsträgerkörper (26a) aufsteckbar ist.

8. Einschubeinheit (20) nach einem der Ansprüche 1 bis 7, wobei der Ladevorrichtungsträgerkörper (26a) eine erste Dichtzone gegenüber einem Gehäuse eines Handteils (2) aufweist, vorzugsweise in Form einer ersten Nut (33a) zur Aufnahme eines ersten Dichtungselements (33b), welche konfiguriert sind im montierten Zustand eine Abdichtung der Einschubeinheit (20) gegenüber der Gehäusewand (17) des Handteils (2) zu bewirken.

9. Einschubeinheit (20) gemäss einem der Ansprüche 1 bis 8, wobei der Ladevorrichtungsträgerkörper (26a) eine zweite Dichtzone gegenüber einem Gehäuse eines Handteils (2) aufweist, vorzugsweise in Form einer zweiten Nut (34a) zur Aufnahme eines zweiten Dichtungselements (34b), welche konfiguriert sind im montierten Zustand eine Abdichtung der Einschubeinheit (20) gegenüber der Gehäusewand (17) des Handteils (2) zu bewirken.

10. Einschubeinheit (20) gemäss Anspruch 7, wobei der Ladevorrichtungsträgerkörper (26a) eine Dichtzone gegenüber dem Abschlussteil (26b) aufweist, vorzugsweise in Form einer Nut (36a) zur Aufnahme eines Dichtrings (36b), welcher konfiguriert ist im montierten Zustand eine Abdichtung des Ladevorrichtungsträgerkörpers (26a) gegenüber dem Abschlussteil (26b) zu bewirken.

11. Einschubeinheit (20) gemäss Anspruch 7 oder 10, wobei das Abschlussteil (26b) eine Dichtzone gegenüber dem Gehäuse eines Handteils (2) aufweist, vorzugsweise in Form einer Nut (37a) zur Aufnahme eines Dichtungselements (37b), welche konfiguriert sind im montierten Zustand eine Abdichtung der Einschubeinheit (20) gegenüber dem Gehäuse des Handteils (2) zu bewirken.

12. Einschubeinheit (20) gemäss einem der Ansprüche 1 bis 11, wobei die Ladevorrichtung (16) und/oder der Ladevorrichtungsträgerkörper (26a) einen Teil der äusseren Oberfläche des Handteils (2) bilden, welche im Wesentlichen senkrecht zur Längsachse (X) des Handteils (2) verläuft.

13. Einschubeinheit (20) gemäss einem der Ansprüche 1 bis 11, wobei das Abschlussteil (26b) des Ladevorrichtungsträgers (26) einen Teil der äusseren Oberfläche des Handteils (2) bildet, welcher im Wesentlichen parallel zur Längsachse (X) des Handteils (2) verläuft.

14. Einschubeinheit (20) gemäss Anspruch 13, wobei das Abschlussteil (26b) des Ladevorrichtungsträgers (26) ein im Wesentlichen ringförmiges Schutzelement für die Ladevorrichtung (16) ausbildet.

15. Einschubeinheit (20) gemäss einem der vorhergehenden Ansprüche, wobei auf dem Ladevorrichtungsträgerkörper (26a) eine oder mehrere Rastnasen (29) angeordnet sind, welche konfiguriert sind im montierten Zustand in korrespondierende Rastausnehmungen (18) in der Gehäusewand (17) des Handteils (2) einzurasten.

16. Einschubeinheit (20) gemäss Anspruch 15, wobei die Rastnasen (29) eine keilartige Form mit einer Einführschräge (29a), einem horizontal verlaufenden Teil (29b) und einer im Wesentlichen senkrecht abschliessenden Rückwand (29c) aufweisen.

17. Einschubeinheit (20) gemäss einem der vorhergehenden Ansprüche, wobei der Ladevorrichtungsträger (26) mittels eines Federlagers (40) federnd an einer Stützstruktur (52) gelagert ist.

18. Einschubeinheit gemäss Anspruch 17, wobei das Federlager (40) einen ersten Federbügel (40a) und einen zweiten Federbügel (40b) umfasst, welche vorzugsweise unabhängig voneinander zwischen dem Ladevorrichtungsträger (26) und der Stützstruktur (52) angeordnet sind.

19. Handteil (2) für ein elektrischen Körperpflegegeräts, insbesondere für eine elektrische Zahnbürste (1), aufweisend ein Gehäuse und eine darin einbringbare Einschubeinheit (20) nach einem der vorhergehenden Ansprüche.

20. Elektrisches Körperpflegegerät, insbesondere elektrische Zahnbürste (1), aufweisend ein Handteil (2) gemäss Anspruch 19.

## Claims

1. Insertion unit (20) for a handpiece (2) of an electric personal care device, in particular an electric toothbrush (1), comprising an insertion carrier (21) on which a drive unit (11), an on/off switch (4), a power source (12), a printed circuit board (15) and a charging device (16) are arranged, wherein
the insertion unit (20) is configured such that a closed circuit can be established via physical electrical lines/cables (13, 14) and/or suitable plug-in contact elements between the components (4, 11, 12, 15, 16) arranged on the insertion carrier (21) without the insertion unit (20) having to be inserted into the corresponding device, wherein
the insertion carrier (21) comprises a charging device carrier (26) in the area of the charging device (16), and wherein the charging device carrier and/or the charging device form part of the outer surface of the handpiece (2) when assembled, wherein
the charging device carrier (26) comprises a charging device carrier body (26a) and an end piece (26b), **characterized in that** the charging device (16) has one or more locking geometries which are configured to seal the charging device (16) against the charging device carrier body (26a) by pressing when assembled, whereby a form fit occurs which causes the charging device to be sealed relative to the charging device carrier body.

2. Insertion unit (20) according to claim 1, wherein the charging device (16) comprises a plug-in device, in particular a charging socket for a power supply unit with a corresponding plug.

3. Insertion unit (20) according to claim 1 or 2, wherein the charging device (16) comprises an inductive device, in particular a charging coil for inserting a corresponding ferrite core.

4. Insertion unit (20) according to claim 1, wherein the charging device carrier (26) is formed in one piece.

5. Insertion unit (20) according to claim 1, wherein the charging device carrier (26) is designed in multiple parts.

6. Insertion unit (20) according to claim 5, wherein, in the case of a multipart design of the charging device carrier (26), the latter comprises a separate end piece (26b) which can be locked into place with the charging device carrier body (26a).

7. Insertion unit (20) according to claim 5, wherein, in the case of a multipart design of the charging device carrier (26), the latter comprises a separate end piece (26b) which can be attached to the charging device carrier body (26a).

8. Insertion unit (20) according to any one of claims 1 to 7, wherein the charging device carrier body (26a) has a first sealing zone opposite a housing of a handpiece (2), preferably in the form of a first groove (33a) for receiving a first sealing element (33b), which are configured to seal the insertion unit (20) against the housing wall (17) of the handpiece (2) when assembled.

9. Insertion unit (20) according to any one of claims 1 to 8, wherein the charging device carrier body (26a) has a second sealing zone opposite a housing of a handpiece (2), preferably in the form of a second groove (34a) for receiving a second sealing element (34b), which are configured to effect a seal of the insert unit (20) relative to the housing wall (17) of the handpiece (2) when assembled.

10. Insertion unit (20) according to claim 7, wherein the charging device carrier body (26a) has a sealing zone opposite the end piece (26b), preferably in the form of a groove (36a) for receiving a sealing element (36b), which is configured to seal the charging device carrier body (26a) against the end piece (26b) when assembled.

11. Insertion unit (20) according to claim 7 or 10, wherein the end piece (26b) has a sealing zone opposite the housing of a handpiece (2), preferably in the form of a groove (37a) for receiving a sealing element (37b), which are configured to effect a seal of the insert unit (20) relative to the housing of the handpiece (2) when assembled.

12. Insertion unit (20) according to any one of claims 1 to 11, wherein the charging device (16) and/or the charging device carrier body (26a) form a part of the outer surface of the handpiece (2) which runs essentially perpendicular to the longitudinal axis (X) of the handpiece (2).

13. Insertion unit (20) according to any one of claims 1 to 11, wherein the end part (26b) of the charging device carrier (26) forms a part of the outer surface of the handpiece (2) which runs essentially parallel to the longitudinal axis (X) of the handpiece (2).

14. Insertion unit (20) according to claim 13, wherein the end piece (26b) of the charging device carrier (26) forms a substantially ring-shaped protective element for the charging device (16).

15. Insertion unit (20) according to any one of the preceding claims, wherein one or more locking tabs (29) are arranged on the charging device carrier body (26a), which are configured to lock into corresponding locking recesses (18) in the housing wall (17) of the handpiece (2) when assembled.

16. Insertion unit (20) according to claim 15, wherein the locking tabs (29) have a wedge-like shape with an insertion bevel (29a), a horizontally extending part (29b) and a substantially vertical rear wall (29c).

17. Insertion unit (20) according to any one of the preceding claims, wherein the charging device carrier (26) is resiliently mounted on a support structure (52) by means of a spring bearing (40).

18. Insert unit according to claim 17, wherein the spring bearing (40) comprises a first spring clip (40a) and a second spring clip (40b), which are preferably arranged independently of each other between the charging device carrier (26) and the support structure (52).

19. Handpiece (2) for an electric personal care device, in particular for an electric toothbrush (1), comprising a housing and an insertion unit (20) according to any one of the preceding claims insertable therein.

20. Electric personal care device, in particular electric toothbrush (1), comprising a handpiece (2) according to claim 19.

## Revendications

1. Unité d'insertion (20) pour une pièce à main (2) d'un appareil électrique de soins corporels, en particulier d'une brosse à dents électrique (1), comprenant un support d'insertion (21) sur lequel sont disposés une unité d'entraînement (11), un interrupteur marche/arrêt (4), une source d'énergie (12), une carte de circuit imprimé (15) ainsi qu'un dispositif de charge (16),
l'unité d'insertion (20) étant configurée de telle sorte qu'un circuit électrique fermé soit établi via des lignes/câbles électriques physiques (13, 14) et/ou des éléments de contact enfichables appropriés entre les composants (4, 11, 12, 15, 16) disposés sur le support d'insertion (21), sans que l'unité d'insertion (20) doive être introduite dans l'appareil correspondant,
le support d'insertion (21) comprenant, dans la zone du dispositif de charge (16) et le support de dispositif de chargement et/ou le dispositif de chargement formant, à l'état monté, une partie de la surface extérieure de la pièce à main (2),
le support de dispositif de chargement (26) comprenant un corps de support de dispositif de chargement (26a) et une partie d'extrémité (26b), **caractérisé en ce que** le dispositif de chargement (16) présente une ou plusieurs géométries d'encliquetage qui sont configurées pour réaliser, à l'état monté, une étanchéité du dispositif de chargement (16) par rapport au corps de support de dispositif de chargement (26a) par compression, un engagement positif se produisant alors, qui assure l'étanchéité du dispositif de chargement par rapport au corps de support de dispositif de chargement.

2. Unité d'insertion (20) selon la revendication 1, dans laquelle le dispositif de charge (16) comprend un dispositif d'enfichage, en particulier une prise de charge pour un bloc d'alimentation muni d'une fiche correspondante.

3. Unité d'insertion (20) selon la revendication 1 ou 2, dans laquelle le dispositif de charge (16) comprend un dispositif inductif, en particulier une bobine de charge destinée à recevoir un noyau de ferrite correspondant.

4. Unité d'insertion (20) selon la revendication 1, dans laquelle le support de dispositif de chargement (26) est réalisé d'un seul tenant.

5. Unité d'insertion (20) selon la revendication 1, dans laquelle le support de dispositif de chargement (26) est réalisé en plusieurs parties.

6. Unité d'insertion (20) selon la revendication 5, dans laquelle, lorsque le support de dispositif de chargement (26) est réalisé en plusieurs parties, celui-ci comprend une partie d'extrémité séparée (26b) qui peut s'encliqueter avec le corps du support de dispositif de chargement (26a).

7. Unité d'insertion (20) selon la revendication 5, dans laquelle, lorsque le support de dispositif de chargement (26) est constitué de plusieurs parties, celui-ci comprend une partie d'extrémité séparée (26b) qui peut être emboîtée sur le corps du support de dispositif de chargement (26a).

8. Unité d'insertion (20) selon l'une des revendications 1 à 7, dans laquelle le corps de support du dispositif de chargement (26a) comporte une première zone d'étanchéité en regard d'un boîtier d'une pièce à main (2), de préférence sous la forme d'une première rainure (33a) destinée à recevoir un premier élément d'étanchéité (33b), qui sont configurés pour assurer, à l'état monté, l'étanchéité de l'unité d'insertion (20) par rapport à la paroi de boîtier (17) de la pièce à main (2).

9. Unité d'insertion (20) selon l'une des revendications 1 à 8, dans laquelle le corps de support du dispositif de chargement (26a) comporte une deuxième zone d'étanchéité en regard d'un boîtier d'une pièce à main (2), de préférence sous la forme d'une deuxième rainure (34a) destinée à recevoir un deuxième élément d'étanchéité (34b), qui sont configurés pour assurer, à l'état monté, l'étanchéité de l'unité d'insertion (20) par rapport à la paroi de boîtier (17) de la pièce de main (2).

10. Unité d'insertion (20) selon la revendication 7, dans laquelle le corps de support du dispositif de chargement (26a) comporte une zone d'étanchéité en regard de la partie d'extrémité (26b), de préférence sous la forme d'une rainure (36a) destinée à recevoir une bague d'étanchéité (36b), qui est configurée pour assurer, à l'état monté, l'étanchéité du corps de support du dispositif de chargement (26a) par rapport à la partie d'extrémité (26b).

11. Unité d'insertion (20) selon la revendication 7 ou 10, dans laquelle la partie d'extrémité (26b) comporte une zone d'étanchéité par rapport au boîtier d'une pièce à main (2), de préférence sous la forme d'une rainure (37a) destinée à recevoir un élément d'étanchéité (37b), qui sont configurées pour assurer, une fois montées, l'étanchéité de l'unité d'insertion (20) par rapport au boîtier de la pièce à main (2).

12. Unité d'insertion (20) selon l'une des revendications 1 à 11, dans laquelle le dispositif de chargement (16) et/ou le corps de support du dispositif de chargement (26a) forment une partie de la surface extérieure de la pièce à main (2) qui s'étend essentiellement perpendiculairement à l'axe longitudinal (X) de la pièce à main.

13. Unité d'insertion (20) selon l'une des revendications 1 à 11, dans laquelle la partie d'extrémité (26b) du support de dispositif de chargement (26) forme une partie de la surface extérieure de la pièce à main (2), qui s'étend sensiblement parallèlement à l'axe longitudinal (X) de la pièce à main (2).

14. Unité d'insertion (20) selon la revendication 13, dans laquelle la partie d'extrémité (26b) du support de dispositif de chargement (26) forme un élément de protection sensiblement annulaire pour le dispositif de chargement (16).

15. Unité d'insertion (20) selon l'une des revendications précédentes, dans laquelle un ou plusieurs ergots d'encliquetage (29) sont disposés sur le corps du support du dispositif de chargement (26a), lesquels sont configurés pour s'encliqueter, à l'état monté, dans des évidements d'encliquetage correspondants (18) dans la paroi du boîtier (17) de la pièce à main (2).

16. Unité d'insertion (20) selon la revendication 15, dans laquelle les ergots d'encliquetage (29) présentent une forme en coin avec un biseau d'insertion (29a), une partie s'étendant horizontalement (29b) et une paroi arrière se terminant essentiellement à la verticale (29c).

17. Unité d'insertion (20) selon l'une des revendications précédentes, dans laquelle le support de dispositif de chargement (26) est monté de manière élastique sur une structure de support (52) au moyen d'un palier à ressort (40).

18. Unité d'insertion selon la revendication 17, dans laquelle le support à ressort (40) comprend un premier étrier à ressort (40a) et un deuxième étrier à ressort (40b), qui sont de préférence disposés indépendamment l'un de l'autre entre le support de dispositif de chargement (26) et la structure de support (52).

19. Pièce à main (2) pour un appareil électrique de soins corporels, en particulier pour une brosse à dents électrique (1), comportant un boîtier et une unité d'insertion (20) pouvant y être insérée selon l'une des revendications précédentes.

20. Appareil électrique de soins corporels, en particulier brosse à dents électrique (1), comprenant une pièce à main (2) selon la revendication 19.
